# FASCICULE DE BREVET EUROPEEN

(11) **EP 3 443 561 B1**
(45) Date de publication et mention de la délivrance du brevet: **01.07.2020**
(21) Numéro de dépôt: 17717443.0
(22) Date de dépôt: 14.04.2017
(51) Int. Cl.: G21C 11/04, E04H 5/02, G21C 13/024, G21D 5/02

(54) **ENSEMBLE POUR LA CONSTRUCTION D'UN RÉACTEUR NUCLÉAIRE ET PROCÉDÉS CORRESPONDANTS**
ANORDNUNG ZUM BAU EINES KERNREAKTORS UND ENTSPRECHENDE VERFAHREN
ASSEMBLY FOR THE CONSTRUCTION OF A NUCLEAR REACTOR AND CORRESPONDING METHODS

(30) Priorité: 15.04.2016 FR 1653374
(43) Date de publication de la demande: 20.02.2019
(73) Titulaire: Société Technique pour l'Energie Atomique, 91190 Villiers Le Bacle (FR)
(72) Inventeur: BRUN, Michel, 13109 SIMIANE-COLLONGUE (FR)
(74) Mandataire: Lavoix
(86) Numéro de dépôt international: PCT/EP2017/059066
(87) Numéro de publication internationale: WO 2017/178649

(56) Documents cités:
- CN-A- 104 299 663
- DE-A1- 19 921 670

## Description

L'invention concerne en général la construction de réacteurs nucléaires, et plus particulièrement de réacteurs de type SMR (Small and modular reactor, réacteur petit modulaire).

Selon un premier aspect, l'invention concerne un ensemble pour la construction d'un réacteur nucléaire faisant partie d'un îlot nucléaire à terre, du type comprenant :
- une cuve destinée à contenir un cœur de réacteur nucléaire ;
- une structure préfabriquée ayant une coque permettant une utilisation de la structure préfabriquée comme structure flottante.

Le principe d'un ensemble préfabriqué intégrable dans une centrale électronucléaire à terre, est connu par EP0061573, qui décrit que la structure flottante comporte tout le NSSS (Nuclear Steam Supply System ou système de fourniture de vapeur nucléaire). La structure flottante constitue une barge de très grande taille et d'un poids très important. Elle est transportée par flottage jusqu'au site d'exploitation du réacteur nucléaire, et est fixée sur des structures de génie civil.

La structure flottante de ce document présente une masse qui peut être estimée à au moins 15 000 tonnes. Sa taille peut être estimée à environ 180 m de longueur, 32 m de largeur et 32 m de hauteur.

La structure flottante est entièrement fabriquée sur un site de construction dédié et est validée fonctionnelle sur ce même site. Ce site de construction représente un investissement majeur, tant par sa taille que par les équipements nécessaires pour réaliser la structure flottante que par les moyens permettant la validation fonctionnelle d'ensemble revendiquée. Une telle stratégie de construction se prête mal à une fabrication en série d'une pluralité de réacteurs nucléaires, le site de construction constituant un goulot d'étranglement en permettant pas d'obtenir une cadence de fabrication élevée.

Enfin, l'opération de flottage de la structure flottante jusqu'au site d'exploitation est extrêmement délicate du fait de la taille et du poids de la structure flottante, comme l'illustre les dispositions de démontage/remontage définies dans EP0061573. CN104299663 divulgue une centrale nucléaire flottante.

Dans ce contexte, l'invention vise à proposer un ensemble pour la construction d'un réacteur nucléaire qui ne présente pas les défauts ci-dessus.

A cette fin, l'invention porte sur un ensemble du type précité. Dans cet ensemble:
- la structure préfabriquée comprend au moins:
   * un bassin définissant au moins une partie de la coque de la structure préfabriquée ;
   * une enceinte étanche, disposée à l'intérieur du bassin, la cuve étant placée dans l'enceinte, le bassin étant prévu pour la réfrigération de l'enceinte en situation accidentelle et/ou étant prévu pour être une source froide alimentant un circuit de refroidissement de sécurité du réacteur nucléaire.

Le principe consistant à immerger l'enceinte de confinement, supposée métallique, dans une réserve d'eau servant de source froide est connu. C'est ainsi que, par exemple que :
- l'ensemble des réacteurs embarqués sur des sous-marins se servent de la coque pour assurer la réfrigération d'enceinte en d'accident,
- FR2985842 utilise en sus cette réserve d'eau en contact avec l'enceinte comme source froide pour un système passif d'évacuation de la puissance résiduelle,
- FR2985845 utilise l'eau de mer entourant la réserve interne de sécurité comme source froide,
- EP2218077 utilise une enceinte immergée pour gérer les accidents de surpression.

La présente invention utilise cette disposition de conception du réacteur final, à savoir immerger l'enceinte de confinement dans un bassin servant de source froide, comme disposition temporaire de construction, et utilise le bassin comme élément structurant de la structure flottante préfabriquée.

Dans un premier aspect, la présente invention réside dans un ensemble selon l'objet de la revendication 1.

L'ensemble peut en outre présenter une ou plusieurs des caractéristiques ci-dessous, considérées individuellement ou selon toutes les combinaisons possibles :
- le bassin comporte une double peau, la double peau ayant une peau interne métallique étanche délimitant intérieurement le bassin, une peau externe métallique définissant la coque de la structure flottante, et des fixations rigides de la peau interne à la peau externe, les peaux interne et externe délimitant entre elles un espace vide qui sera ultérieurement coulé en béton pour assurer l'intégration de la structure préfabriquée dans le génie civil de l'îlot nucléaire ;
- la structure préfabriquée comprend une pluralité de connecteurs internes fixés à la peau interne, une pluralité de connecteurs externes fixés à la peau externe, chaque connecteur interne étant prévu pour être raccordé à une ou plusieurs lignes internes de puissance et/ou de contrôle-commande, chaque connecteur externe étant prévu pour être raccordé à une ou plusieurs lignes externes de puissance et/ou de contrôle-commande, les connecteurs internes étant raccordés électriquement aux connecteurs externes de telle sorte plusieurs lignes internes arrivant à un même connecteur interne repartent de connecteurs externes différents et/ou que des lignes internes arrivant à des connecteurs internes différents repartent d'un même connecteur externe ;

- la structure préfabriquée comprend un canal de transfert d'assemblages de combustible nucléaire définissant au moins une partie de la coque de la structure préfabriquée, et un canal de raccordement pour les assemblages de combustibles nucléaires entre d'un côté l'enceinte et d'un autre côté dans le canal de transfert ;
- le canal comporte une double peau, la double peau ayant une peau interne métallique portant un liner délimitant intérieurement le canal, une peau externe métallique définissant une partie de la coque de la structure préfabriquée, et des fixations rigides de la peau interne à la peau externe, les peaux interne et externe délimitant entre elles un espace vide ;
- la structure préfabriquée comporte un chemin d'accès prévu pour l'accès du personnel à l'intérieur de l'enceinte, débouchant d'un côté à l'intérieur de l'enceinte et d'un autre côté à l'extérieur de la structure préfabriquée ;
- l'ensemble est prévu pour la fabrication d'un réacteur nucléaire où un fluide primaire circule dans le cœur de réacteur nucléaire, le réacteur nucléaire comprenant une pluralité de circuits primaires haute pression dans lesquels le fluide primaire circule à une pression supérieure à 100 bars, la structure préfabriquée comprenant au moins tous les circuits primaires haute pression, les circuits primaires haute pression étant logés à l'intérieur de l'enceinte et/ou de la cuve ;
- l'ensemble est prévu pour la fabrication d'un réacteur nucléaire où de l'eau est vaporisée dans au moins un organe générateur de vapeur, le réacteur nucléaire comprenant des circuit secondaires dans lesquels de l'eau sous forme liquide ou vapeur circule à une pression supérieure à 30 bars, les circuits secondaires étant pourvus chacun d'un tronçon interne raccordé fluidiquement à l'organe générateur de vapeur, d'un tronçon externe prévu pour être raccordé fluidiquement à une machine à vapeur, et d'au moins un organe de coupure prévu pour sélectivement isoler fluidiquement le tronçon interne du tronçon externe, la structure préfabriquée comprenant au moins l'intégralité de chaque tronçon interne et chaque organe de coupure , chaque tronçon interne et chaque organe de coupure étant logé à l'intérieur de l'enceinte et/ou de la cuve ; et
- l'enceinte est dépourvue des moyens de manutention nécessaires aux opérations d'entretien et de remplacement des assemblages de combustibles nucléaires, logés à l'intérieur de l'enceinte, l'enceinte comportant un couvercle amovible situé au-dessus de la cuve adapté pour permettre lesdites opérations.
- la structure préfabriquée comporte un châssis métallique auquel le bassin est fixé, l'ensemble comportant des flotteurs fixés de manière réversible à la structure préfabriquée, le châssis métallique assurant la reprise et la transmission d'au moins une partie des efforts entre les flotteurs et la structure préfabriquée.

Dans un second aspect, l'invention concerne un procédé de construction d'un réacteur nucléaire selon l'objet de la revendication 11, ce procédé comprenant les étapes suivantes:
- fabrication de la cuve ;
- fabrication de la structure préfabriquée ;
- introduction de la cuve à l'intérieur de l'enceinte ;
- réalisation de structures de génie civil sur un site d'exploitation du réacteur nucléaire;
- transport par flottage de la structure préfabriquée jusqu'au site d'exploitation;
- fixation de la structure préfabriquée aux structures de génie civil.

Le procédé peut en outre présenter une ou plusieurs des caractéristiques ci-dessous, considérées individuellement ou selon toutes les combinaisons possibles :
- le procédé comprend une étape de raccordement du canal de transfert à une piscine de stockage d'assemblages de combustible nucléaire ;
- l'étape de fabrication de la structure préfabriquée comprend une sous-étape de fixation à la peau interne des connecteurs internes, une sous-étape de fixation à la peau externe des connecteurs externes, et une sous-étape de réalisation des câblages associés ;
- la structure préfabriquée comporte un châssis métallique, et une première fixation de l'enceinte au châssis, l'étape de fixation de la structure préfabriquée aux structures de génie civil comprenant la fixation du châssis aux structures de génie civil au moins par une seconde fixation thermiquement découplée de la première fixation ;
- des flotteurs réutilisables sont fixés à la structure préfabriquée de manière réversible pendant l'étape de flottage ; et
- l'étape de réalisation des structures de génie civil comprend une sous-étape de réalisation d'une forme remplie d'eau, la structure préfabriquée étant acheminée jusque dans la forme au cours de l'étape de flottage dans une position où les flotteurs occupent des zones déterminées de la forme, le procédé comportant une étape de constructions de locaux dans lesdites zones déterminées de la forme, lesdits locaux abritant des structures et circuits du réacteur nucléaire non intégrés dans la structure préfabriquée ;
- le procédé comprend une étape de coulée de béton dans l'espace vide de la double peau du bassin ; et
- le procédé comporte en outre une étape de raccordement fluidique du circuit de refroidissement de sécurité du réacteur au bassin et à la cuve.

Selon un troisième aspect, l'invention concerne un procédé de construction d'une pluralité de réacteurs nucléaires implantés dans au moins des première et seconde régions du monde différentes l'une de l'autre, chaque réacteur nucléaire étant fabriqué tel que décrit précédemment :
- les cuves de tous les réacteurs nucléaires étant fabriqués dans une même installation centrale ;
- les structures préfabriquées des réacteurs nucléaires implantés dans la première région du monde étant fabriquées dans une première installation d'intégration située dans la première région du monde, les structures préfabriquées des réacteurs nucléaires implantés dans la seconde région du monde étant fabriquées dans une seconde installation d'intégration située dans la seconde région du monde.

Ainsi, l'invention concerne à la fois :
- un ensemble comportant une structure préfabriquée permettant de limiter l'investissement à réaliser pour établir la structure industrielle adaptée pour la construction du réacteur nucléaire ;
- le procédé de transport de cette structure préfabriquée qui, du fait de sa masse/taille contenue, est aisément transportable par flottage jusqu'au site final sans nécessiter de moyens de manutention exceptionnels (grues de capacité exceptionnelle par exemple) ;
- la logique générale des travaux dans les différents lieux de réalisation, permettant en particulier de ne réaliser sur site que des opérations moins critiques en termes de réalisation, et tout particulièrement de ne pas faire porter au Génie-Civil, réalisé sur site, d'exigences nucléaires importantes.

Dans l'invention, la structure préfabriquée est géométriquement délimitée par le bassin assurant la source froide du circuit de sécurité et/ou de réfrigération d'enceinte. Celui-ci est bien adapté par nature pour constituer une telle coque, en particulier quand il est réalisé en technologie Steel-Plate Reinforced Concrete (ou bi-steel). Sa taille permet de constituer une structure flottante de masse limitée, typiquement inférieure à 4000 tonnes. Les dimensions de la structure flottante sont également réduites par rapport au cas de EP0061573. La structure flottante de l'invention présente par exemple une longueur de 25 m, une largeur de 20 m et une hauteur de 18 m, de telle sorte que le transport par flottage de la structure flottante est grandement facilité. Les valeurs ci-dessus correspondent au cas d'un réacteur nucléaire de type SMR, ayant une cuve d'une hauteur inférieure à 15 m et une puissance thermique inférieure à 600 mégawatts. Malgré cette exigence de contenir la masse/taille de cette structure préfabriquée, celle-ci peut intégrer les principaux équipements chaudronnés des circuits primaires et secondaire principaux (la cuve, les générateurs de vapeur, les bâches, accumulateurs,..), les capteurs/actionneurs associés, l'enceinte de confinement résistant aux surpressions d'accident, et donc une grande partie des composants/opérations critiques.

La structure préfabriquée en revanche ne comporte pas la turbine entraînée par la vapeur du circuit secondaire, ni l'alternateur entraîné par la turbine.

La structure préfabriquée ne comporte pas non plus les assemblages de combustible nucléaire formant le cœur du réacteur nucléaire. Ceux-ci sont chargés dans la cuve après que la structure préfabriquée a été intégrée dans le génie civil de l'îlot nucléaire.

En complément, le choix de ce périmètre pour la structure flottante permet également de simplifier considérablement les interfaces à réaliser sur site entre la structure flottante et le génie civil. Notamment, le génie civil réalisé sur site n'a aucune interface directe de supportage avec les principaux composants nucléaires.

Typiquement, il n'a pas à résister à la surpression d'accident, et est défini avec une structure rectangulaire (pas de Génie Civil cylindrique), régulière bien adaptée à la préfabrication sur site.

Enfin, le choix de ne pas réaliser dans le site d'intégration l'intégralité du NSSS, et de ne pas chercher à aller au-delà des essais de fin de montage (sans caractère fonctionnel) au contraire de EP0061573, permet de limiter la hauteur des investissements à réaliser pour établir l'infrastructure industrielle d'intégration de l'ensemble préfabriqué, ladite infrastructure industrielle reposant sur les compétences et moyens disponibles assez largement dans un chantier naval.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique simplifiée de l'îlot nucléaire d'un réacteur construit selon l'invention ;
- la figure 2 est une vue en perspective de la structure préfabriquée de l'invention ;
- la figure 3 est une représentation schématique simplifiée, en vue de dessus, de plusieurs structures préfabriquées juxtaposées ;
- la figure 4 est une vue en coupe, simplifiée, d'une partie de la structure préfabriquée, montrant le chemin d'accès à l'enceinte ;
- la figure 5 est une représentation schématique simplifiée des plastrons d'interface équipant la structure préfabriquée ;
- la figure 6 est une vue de dessous de la structure préfabriquée de la figure 14 ;
- la figure 7 est une représentation schématique simplifiée du principe d'ancrage de la structure préfabriqué sur le génie civil ;
- la figure 8 est une représentation schématique générale du procédé de construction de l'invention ; et
- les figures 9 à 19 représentent de manière schématique différentes étapes du procédé de construction de l'invention.

### Définitions

Composant/opération critique : Composant, ensemble de composants ou opération de construction présentant une difficulté particulière pour la réalisation du fait de son importance pour la sûreté et/ou du niveau de qualité requis et/ou de la difficulté à garantir les exigences techniques de réalisation et/ou de la difficulté de maîtrise des technologies mises en œuvre.

Steel-Plate-Reinforced Concrete (ou bi-steel) : technologie de réalisation de voiles en béton dans laquelle deux parois métalliques parallèles sont d'abord mises en place, et l'espace séparant les deux parois est ensuite rempli de béton (voir par exemple le rapport US-DOE MPR-2610 septembre 2004).

NSSS : (pour mémoire, terme utilisé dans EP0061573 mais non utilisé pour décrire l'invention) Nuclear Steam Supply System, ou système de fourniture de vapeur nucléaire. Selon la définition de la Commission de Régulation Nucléaire US (US-Nuclear Regulatory Commission) : le réacteur et les pompes de refroidissement du réacteur (et les générateurs de vapeur pour les réacteurs à eau pressurisée) et les conduits associés, dans une centrale nucléaire, utilisés pour générer la vapeur nécessaire pour entraîner un turbogénérateur.

NI (Nuclear Island, ou îlot nucléaire) : dans le présent document, bâtiment regroupant un ou plusieurs réacteurs ainsi qu'une ou plusieurs piscine(s) pour l'entreposage des assemblages de combustible nucléaire et pour l'intervention sur des équipements irradiés ainsi qu'une installation de stockage et/ou traitement des effluents.

L'invention porte sur un ensemble 1 prévu pour la construction d'un réacteur nucléaire faisant partie d'un îlot nucléaire à terre, et sur un procédé de construction d'un réacteur nucléaire faisant partie d'un îlot nucléaire à terre à l'aide de cet ensemble. Ce réacteur nucléaire est typiquement un SMR (Small and Modular Reactor ou réacteur petit et modulaire). Ce réacteur a typiquement une puissance inférieure à 600 mégawatts thermiques.

Un aspect important de l'invention consiste à une définition particulière des différents composants de l'ensemble 1 pour permettre la répartition de la fabrication et de l'assemblage des différents composants entre différents sites, afin d'atteindre plusieurs objectifs :
- Réaliser dans des installations dédiées, autre que le site d'exploitation du réacteur nucléaire, la réalisation, le montage (intégration partielle) et la pré-validation de tous les composants/opérations critiques. La répartition de la fabrication/montage entre un (ou plusieurs) sites spécialisés, proposée par l'innovation, assure la capitalisation l'expérience acquise (effet d'apprentissage) pour permette une diminution des coûts, risques et délais de construction ;
- Limiter les goulots d'étranglement que représenteraient des installations industrielles dédiées permettant une intégration quasi-totale du NSSS (comme le propose EP0061573 ou les projets de barges/bateau prêts à connecter au réseau). L'invention permet une fabrication d'une pluralité de réacteurs nucléaires à une cadence importante, sans multiplier les investissements lourds ;
- Limiter les contraintes imposées au génie civil, par nature réalisé sur site, du fait du caractère nucléaire de l'installation ;
- Ne pas avoir recours à des moyens de levage exceptionnels, en dépit du poids de certains composants;
- Permettre l'opportunité de faire intervenir, pour les composants et opérations non critiques, les entreprises locales du pays où se situe le site d'exploitation sans faire prendre de risque majeur au projet.

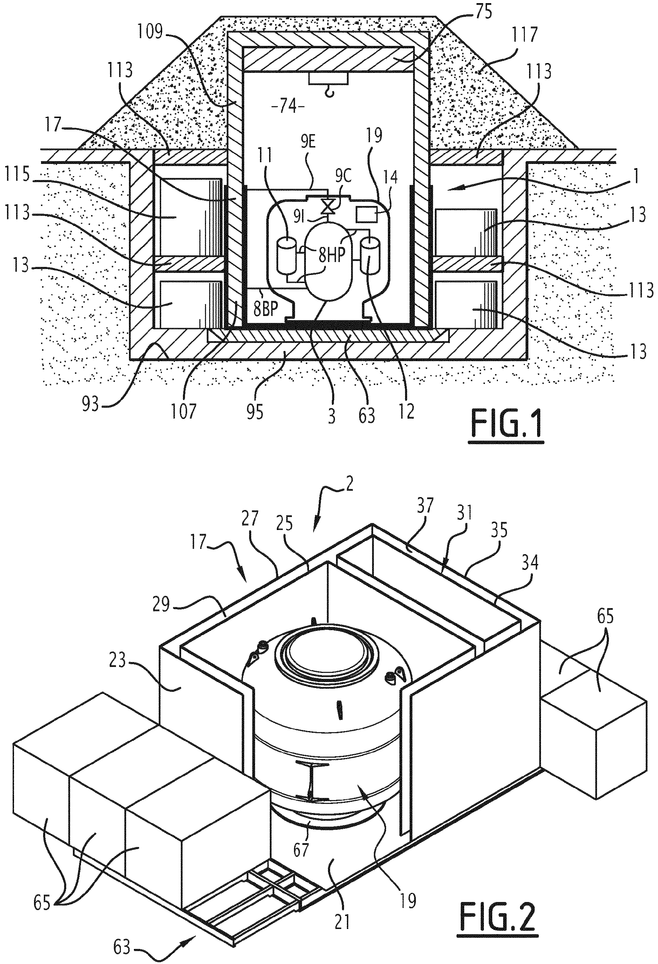

L'ensemble 1 illustré sur la figure 1 comporte une structure préfabriquée 2, illustrée sur la figure 2. Cette structure préfabriquée est prévue pour être utilisée comme structure flottante.

La structure préfabriquée 2 rassemble, après assemblage, la quasi-totalité des composants/opérations critiques.

La Figure 1 représente l'état nucléaire d'un réacteur construit à l'aide d'un ensemble 1 conforme à l'invention.

L'ensemble 1 comporte notamment un grand nombre de composants nucléaires sous pression qui sont montés sur la structure préfabriquée 2.

Parmi ces composants, on trouve au moins la cuve 3, destinée à contenir un cœur de réacteur nucléaire. Le cœur n'est pas chargé dans la cuve 3.

On trouve de préférence également au moins tout ou partie des composants de la liste ci-dessous, cette liste n'étant pas limitative :
- les internes 4 de la cuve 3,
- le pressuriseur 5, quand celui-ci n'est pas intégré dans la cuve 3 ;
- e(s) générateur(s) de vapeur 7, quand ceux-ci ne sont pas intégrés dans la cuve 3,
- les échangeurs des circuits de sécurité 14 assurant la réfrigération de sécurité, passive du réacteur en puisant leur source froide dans le bassin d'enceinte,
- les circuits primaires haute pression 8 HP qui, même dans un réacteur de type intégré, existent pour assurer les fonctions de brassage, réfrigération d'arrêt, prélèvement et relevage, appoints et purges d'eau, lien vers les lignes d'injection de sécurité basse pression,....
- les circuits secondaires 9 (eau alimentaire ou vapeur) jusqu'aux organes d'isolation sûre,
- les accumulateurs de sécurité 11 et circuits associés,
- les cuves, bâches et caisses 12, destinées à recueillir du fluide primaires (ou secondaire potentiellement contaminé) dans les différentes situations d'exploitation dont accidentelle
- les aboutissants des circuits auxiliaires (réfrigérations, réfrigération des auxiliaires, traitement physico-chimique et filtration, gestion des appoints/purges d'eau,...) dont le process est situé hors de l'enceinte et isolables de manière sûre.
- les capteurs et actionneurs (pompes primaires, CRDM,...) associés à ces composants et circuits

La structure préfabriquée 2 comprend par ailleurs un bassin 17 et une enceinte de confinement 19.

Le bassin 17 est prévu pour servir de source froide pour les circuits de sécurité 14 et/ou pour la réfrigération de l'enceinte 19 en situation d'accident.

Dans le premier cas, la structure préfabriquée 2 comprend lesdits circuits de sécurité 14, ceux-ci ayant au moins une aspiration en communication fluidique avec le volume interne du bassin 17.

Dans un second cas, la structure préfabriquée 2 comprend un bassin 17 de volume suffisant pour assurer passivement la réfrigération de l'enceinte pendant un délai de grâce important avant qu'un appoint d'eau ne soit requis. Ce délai est typiquement d'au moins trois jours. Le volume du bassin est typiquement supérieur à 5000 m³..

L'enceinte de confinement 19 est une enceinte métallique étanche, intégrant une grande partie des composants. Cette enceinte constitue la troisième barrière de confinement règlementaire lorsque le réacteur est en fonctionnement. L'enceinte 19 dans l'exemple représenté présente une forme générale de cylindre aplati, avec un axe central vertical, parallèle à la cuve. Cette géométrie favorise une tenue à la pression élevée consubstantielle d'une taille d'enceinte contenue, avec des épaisseurs de métal contenues (taille/masse d'ensemble).

Les circuits primaires haute pression 8 HP sont les circuits dans lesquels le fluide primaire circule à une pression supérieure à 100 bars. Les circuits primaires haute pression 8HP sont logés à l'intérieur de l'enceinte 19 et/ou de la cuve 3.

L'ensemble 1 est prévu pour la fabrication d'un réacteur nucléaire où de l'eau est vaporisée dans au moins un organe générateur de vapeur, qui est ici un générateur de vapeur. L'eau circule sous forme liquide ou vapeur dans les circuits secondaires 9, à une pression supérieure à 30 bars. Les circuits secondaires 9 sont pourvus chacun d'un tronçon interne 9I raccordé fluidiquement à l'organe générateur de vapeur, d'un tronçon externe 9^{E} prévu pour être raccordé fluidiquement à une machine à vapeur, et d'au moins un organe de coupure 9C prévu pour sélectivement isoler fluidiquement le tronçon interne 9I du tronçon externe 9E. La structure préfabriquée 2 comprend au moins l'intégralité de chaque tronçon interne 9I et chaque organe de coupure 9C. Chaque tronçon interne 9I et chaque organe de coupure 9C est logé à l'intérieur de l'enceinte 19 et/ou de la cuve 3.

Par ailleurs, l'ensemble 1 comporte encore différents ensembles fonctionnels du réacteur nucléaire. Ces ensembles fonctionnels sont des circuits de fluide à basse pression, ou des éléments du système de contrôle commande central du réacteur, ou des tableaux d'alimentation électrique centraux du réacteur. Ainsi le réacteur comporte au moins un ou plusieurs des circuits de fluide suivants : le circuit d'épuration du fluide primaire, le circuit permettant de réaliser un appoint d'eau dans le circuit primaire ou dans le circuit secondaire, le circuit de gestion des effluents, le laboratoire chimique, le circuit de contrôle volumique prévu pour contrôler le volume de liquide primaire et le volume de liquide secondaire circulant dans le réacteur nucléaire, le circuit de contrôle de la composition chimique du fluide primaire, ... mais aussi les tableaux électriques et les armoires de contrôle-commande et les pupitres de commande. Chaque ensemble fonctionnel ainsi défini est monté sur un ou plusieurs skids 13, avec le tableau d'alimentation électrique et de contrôle commande local correspondant. Un skid est entendu ici comme étant un châssis transportable, sur lequel tous les équipements constituant le circuit sont montés. Chaque skid constitue ainsi un module autonome, validé fonctionnellement en usine. Il est à noter que les skids ci-dessus ne comportent que des lignes primaires à basse pression, de petits diamètres. Chaque skid est de taille adaptée pour être transporté dans un conteneur maritime de 20 pieds ou 40 pieds. Ils ne sont pas prévus pour être assemblés à la structure préfabriquée 2 avant flottage de celle-ci jusqu'au site d'exploitation.

Selon un aspect essentiel de l'invention, la structure préfabriquée 2, après montage des différents composants énumérés ci-dessus, est adaptée pour être utilisée comme une structure flottante, et pour être transportée par flottage jusqu'au site d'exploitation du réacteur nucléaire. La masse de cette structure est typiquement contenue à environ 4000t et sa taille à environ (Lxlxh) 25mx20mx18m pour constituer une structure aisément réalisable dans une cale sèche usuelle et aisément transportable par flottage.

On entend ici par flottage le fait de transporter la structure 2 en la faisant flotter sur une voie d'eau. La voie d'eau est par exemple un fleuve, une mer ou un océan.

La structure préfabriquée 2 est représentée notamment sur la figure 2.

La structure préfabriquée, essentiellement métallique, est une structure de type mécanosoudé.

La structure préfabriquée 2 comporte une coque, jouant le rôle de la coque d'un bateau. Cette coque, pendant le transport par flottage, est partiellement plongée dans l'eau. Elle est étanche.

Comme visible sur la figure 2, le bassin 17 définit au moins une partie de la coque de la structure préfabriquée. L'enceinte étanche 19 est disposée à l'intérieur du bassin 17.

Le bassin 17 comporte un fond 21 et des parois latérales 23 solidaires du fond 21. Il est ouvert vers le haut. Le bassin 17 est réalisé selon une technique connue sous le nom bi-steel. Plus précisément, le bassin 17 comporte une double peau, la double peau ayant une peau interne 25 métallique délimitant intérieurement le bassin 17, une peau externe 27 métallique définissant la coque de la structure flottante, et des fixations rigides non représentées de la peau interne 25 à la peau externe 27. Les peaux interne et externe 25, 27 délimitent entre elles un espace vide 29 qui sera ultérieurement coulé en béton pour assurer l'intégration de cette structure préfabriqué 2 dans le Génie Civil du NI. Les fixations rigides entre les deux peaux sont définies conformément aux règles de Génie Civil propres à la technologie bi-steel et n'ont pas de rôle fonctionnel.

Le bassin 17, et plus précisément sa structure avec une double peau, est ouvert vers le haut.

Le bassin 17 définit au moins 50%, de préférence au moins 75% de la surface externe de la coque avant fixation des flotteurs (voir plus loin).

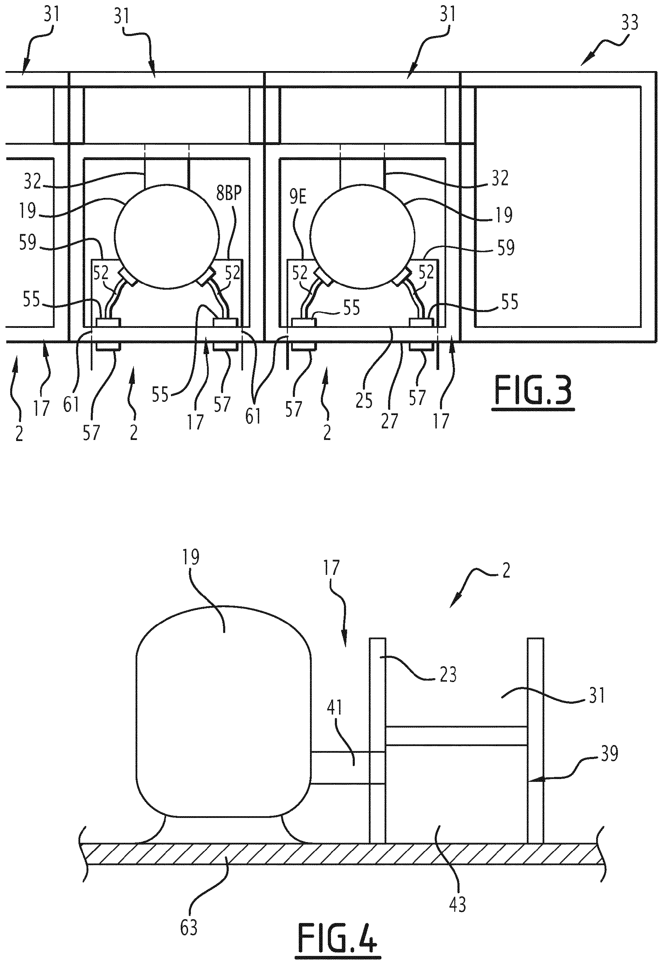

Avantageusement, la structure préfabriquée 2 comporte encore une partie du canal 31 de transfert des assemblages de combustibles nucléaires, et le canal de raccordement 32 entre l'enceinte 19 et le canal de transfert 31 (figure 3). Le canal 31 est prévu pour le déchargement sous eau des assemblages de combustibles nucléaires hors de la cuve 3 du réacteur nucléaire, et le transfert sous eau de ces assemblages jusqu'à une piscine 33 représentée sur la figure 3. Typiquement, le canal 31 jouxte et est solidaire du bassin 17.

Les canaux 31 et 32 sont réalisés selon la technique dite bi-steel. Ils comportent ainsi une double peau, la double peau ayant une peau interne 34 métallique portant un liner inox non représenté délimitant intérieurement le canal 31, une peau externe 35 métallique définissant une partie de la coque de la structure préfabriquée 2, et des fixations rigides non représentées de la peau interne à la peau externe. Les peaux internes et externe 34, 35 délimitent entre elles un espace vide 37 qui sera ultérieurement rempli de béton pour s'intégrer dans le Génie Civil du NI.

Pour le bassin et pour le canal, la double peau sert d'armement et de coffrage pour couler du béton dans l'espace vide entre les deux peaux, une fois la structure flottante en place sur le site d'exploitation du réacteur. Ainsi, la double peau servira de structure de génie civil pour le réacteur nucléaire lui-même. Cette structure de génie civil ne nécessitera qu'un coulage sur le site d'exploitation, de telle sorte qu'aucune opération de coffrage ou de mise en place de ferraillage n'est nécessaire pour créer ces structures de génie civil.

Avantageusement, la structure préfabriquée 2 comporte un chemin d'accès 39 prévu pour l'accès du personnel à l'intérieur de l'enceinte 19 (figure 4). Ce chemin d'accès débouche d'un côté à l'intérieur de l'enceinte 19 et d'un autre côté à l'extérieur de la structure préfabriquée 2.

Typiquement, le chemin d'accès 39 comporte un sas 41 et une galerie 43. , Par exemple la galerie s'étend sous le canal de transfert 31. Le sas 49 est une structure métallique étanche, rigidement fixée à la fois à l'enceinte 19 et au bassin 17. Elle traverse la paroi latérale 23 du bassin 17. Ce sas 49 débouche d'un côté à l'intérieur de l'enceinte 19, et d'un autre côté dans la galerie 43. Le sas 41 et la galerie 43 sont eux aussi réalisés en technologie bi-steel pour s'intégrer ultérieurement dans le Génie Civil du NI.

Selon une autre caractéristique avantageuse de l'invention, la structure préfabriquée 2 intègre les adaptations de câblages (brassage et technologie) entre le câblage interne à l'enceinte et le câblage externe. En effet, les câbles sont regroupés (brassés) du côté interne du bassin selon une logique correspondant au regroupement des câbles à l'intérieur de l'enceinte et au niveau des traversées de câble de l'enceinte 19 elle-même. En revanche, à l'extérieur du bassin, les câbles sont regroupés (brassés) de manière à desservir les skids 13 selon une logique qui peut être différente. De plus, les câbles provenant de l'enceinte 19 peuvent être d'un type différent de celui des câbles raccordés aux skids, car répondant à des exigences techniques différentes. Par exemple, les câbles et connecteurs internes sont étanches, et sont prévus pour être noyés dans l'eau du bassin et qualifiés aux supporter les conditions accidentelles réglementaires à prendre en compte du côté interne du bassin 17. Des exigences différentes s'appliquent aux câbles et raccordement externe au bassin.

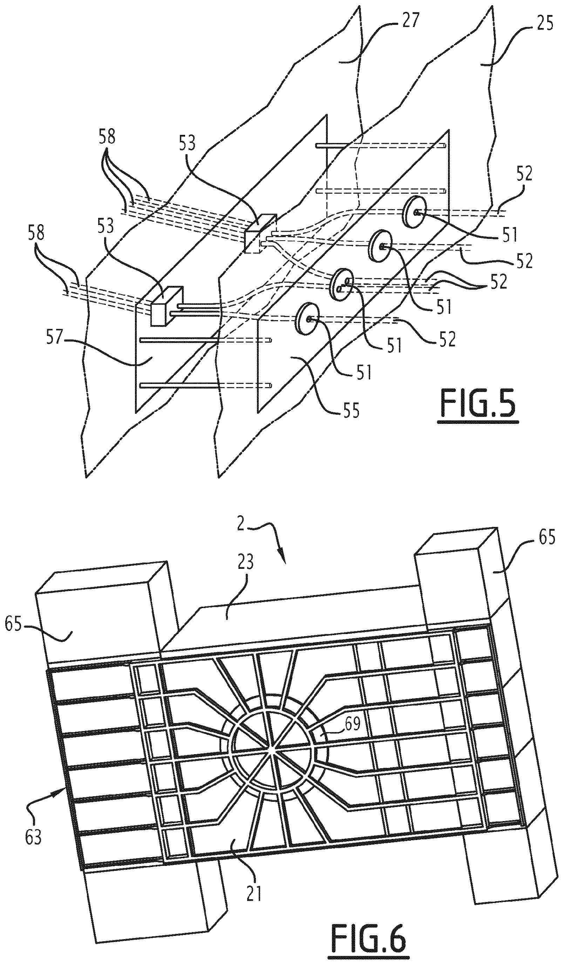

Comme visible sur la figure 5, la structure préfabriquée 2 comprend d'une part une pluralité de connecteurs internes 51 fixés à la peau interne 25 du bassin 17, prévus pour être raccordés à des lignes électriques de puissance et/ou des lignes de contrôle commande. Ces lignes internes sont désignées par la référence 52 sur les figures 3 et 5. Les lignes internes 52 sont prévues pour raccorder les connecteurs internes 51 à des capteurs, ou des actionneurs situés à l'intérieur de l'enceinte 19. La structure préfabriquée 2 comprend d'autre part une pluralité de connecteurs ou de boitiers de raccordement externes 53 fixés à la peau externe 27 du bassin 17, et prévus pour être raccordés à d'autres lignes électriques de puissance et/ou d'autres lignes de contrôle commande. Ces lignes externes 58 sont prévues typiquement pour se raccorder aux skids 13.

Comme visible sur la figure 5, les connecteurs internes 51 sont raccordés électriquement aux connecteurs externes 53, en assurant autant que nécessaire adaptations de brassage et/ou de technologues. Ces liaisons sont réalisées et testées en usine.

Plus précisément, les connecteurs internes 51 sont raccordés électriquement aux connecteurs externes 53 de telle sorte plusieurs lignes internes 52 arrivant à un même connecteur interne 51 repartent de connecteurs externes 53 différents et/ou que des lignes internes 52 arrivant à des connecteurs internes 51 différents repartent d'un même connecteur externe 53.

Une telle disposition permet d'abord de simplifier les opérations de câblage à réaliser sur le site d'exploitation puisque : (i) d'une part les connecteurs externes 53 sont directement compatibles en terme de brassage et technologie avec la définition des skids 13 et (ii) d'autre part le raccordement in-fine depuis les connecteurs externes 53 vers les capteurs/actionneurs situés dans l'enceinte auront été testés en fin de montage (test sans caractère fonctionnel) de bout en bout avant expédition de la structure préfabriquée 2 sur site.

De préférence, tous les connecteurs internes 51 sont rassemblés sur au moins un plastron interne 55. Chaque plastron interne 55 est soudé sur une ouverture laissée en attente dans la peau interne 27 du bassin.

De même, les boitiers de raccordement externes 53 sont rassemblés sur au moins un plastron externe 57. Chaque plastron externe 57 est rigidement fixé, typiquement par soudage, dans des ouvertures en attente dans la peau externe 29 du bassin.

Selon une autre caractéristique avantageuse de l'invention, visible sur la figure 3, la structure préfabriquée 2 comprend une pluralité de raccordement pour les lignes primaires basse pression 8BP, les tronçons externes des circuits vapeur 9E et encore d'autres lignes de fluide 59, qui sortent de l'enceinte 19 et sont prévus pour être raccordés aux skids 13 de circuit de fluide ou à d'autres équipements placés à l'extérieur de la structure flottante 15. Ces lignes sont prévues pour raccordées à des traversées 61 ménagées à travers la double peau du bassin 17, typiquement au niveau des parois latérales 23.

Ainsi, sur le site d'exploitation, les opérations de raccordement des lignes aux skids de circuit 13 ou aux autres équipements se limitent à tirer des lignes de fluide à basse pression depuis les emplacements prévus dans les bâtiments pour les skids jusqu'aux traversées 61.

Il est important de souligner que le Génie Civil, réalisé sur site, n'a pas d'interface d'exploitation avec des lignes à haute pression et haute énergie et/ou avec les composants nucléaires principaux pesants, lignes et composants devant résister au séisme. Ces interfaces sont des interfaces critiques généralement délicates à réaliser, et sont la source de nombreux retards. Les structures de génie civil les plus proches du réacteur sont ici les parois latérales du bassin 17 et/ou du canal 31. Le fait de réaliser les interfaces par le biais de la double peau du bassin, en incorporant dans la double peau les plastrons et/ou les traversées dès la fabrication de la structure flottante, simplifie considérablement la construction du réacteur.

Selon une autre caractéristique avantageuse de l'invention, comme illustré sur les figures 2 et 6, la structure préfabriquée 2 comporte typiquement un châssis métallique 63 auquel le bassin 17 est fixé.

L'ensemble 1 comporte également des flotteurs 65 fixés de manière réversible à la structure préfabriquée 2.

Le châssis 63 est une structure mécanosoudée, comportant des poutres et/ou de caissons rigidement assemblés les uns aux autres. Dans l'exemple représenté, le châssis 63 est une structure horizontale, de faible hauteur. Le châssis 63 est placé sous le bassin 17. Typiquement, le fond 21 du bassin, et éventuellement le fond du canal de transfert 31 et/ou de la galerie 43, reposent sur le châssis 63 et sont rigidement fixés à celui-ci.

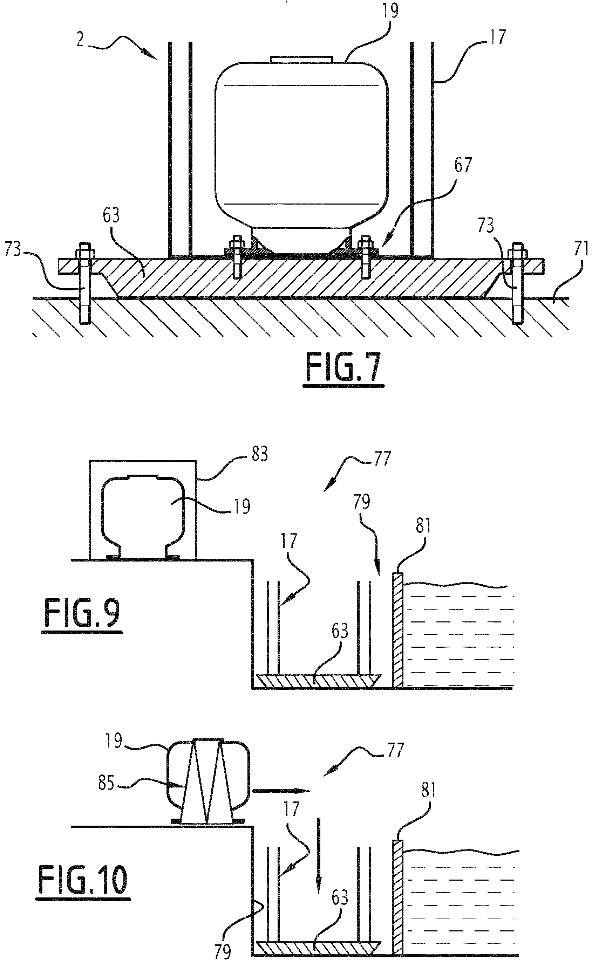

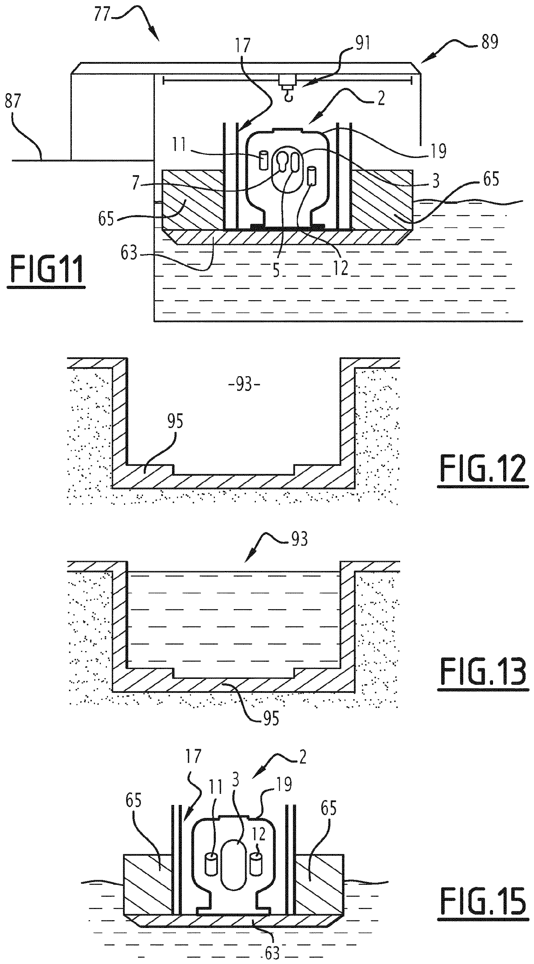

Par ailleurs, l'enceinte 19 est rigidement fixée au châssis 63 par une première fixation 67 visible sur les figures 2 et 7. En effet, l'enceinte 19, et tous les équipements logés à l'intérieur de cette enceinte 19, forment un composant particulièrement massif. Le châssis 63, du fait de sa rigidité, est particulièrement bien adapté pour la fixation de ce composant massif. Le châssis 63, si nécessaire, comporte des renforts tels que la structure annulaire 69 visible sur la figure 15, pour la fixation de l'enceinte 19.

Les flotteurs 65 sont fixés au châssis 63.

Ils sont accolés et fixés à la structure préfabriquée 2.

Le châssis 63 a un double rôle.

Pendant l'étape de transport par flottage de la structure préfabriquée 2, le châssis 63 assure la répartition de la poussée hydrostatique, et en particulier la reprise et la transmission des efforts entre des flotteurs 65 d'une part, et cette structure préfabriquée 2 d'autre part.

Une fois la structure préfabriquée 2 en place sur le site d'exploitation, le châssis 63 sert d'interface entre l'enceinte 19 et les structures de génie civil. Elle sert également d'interface entre le bassin 17, éventuellement le canal 31, et les structures de génie civil. Ainsi, il n'y a pas d'interface directe entre l'enceinte 19 et lesdites structures de génie civil, et plus généralement entre tous les composants soumis à des contraintes thermomécaniques fortes en situation accidentelle et le génie civil.

Plus précisément, après mise en place de la structure préfabriquée 2 sur le site d'exploitation, le châssis 63 est rigidement fixé aux structures de génie civil 71 par le biais de secondes fixations 73, comme illustré sur la figure 7. Les fixations 73 sont situées à distance des fixations 67 permettant de solidariser l'enceinte 19 au châssis 63. Ainsi, en situation accidentelle, les fixations 67 sont soumises à un chargement thermomécanique, mais les fixations 73 sont soumises seulement à un chargement mécanique. En d'autres termes, les fixations 73 sont dimensionnées seulement pour un chargement mécanique, alors que les fixations 67 doivent être dimensionnées pour un chargement à la fois thermique et mécanique. Ceci facilite grandement la conception des fixations 67 et 73. En effet, la fixation 67 est une fixation métal-métal, solidarisant une structure métallique (l'enceinte 19) à une autre structure métallique (le châssis 63). Le dimensionnement de telles fixations métal-métal pour un chargement thermomécanique est une opération classique.

En revanche, les fixations 73 solidarisent une structure métallique (le châssis 63) a une structure de génie civil en béton (structure 71). Le dimensionnement d'une telle fixation pour un chargement mécanique est une opération classique. En revanche le dimensionnement d'une liaison entre une structure métallique et une structure de génie civil pour un chargement thermomécanique est une opération délicate. Ceci est évité dans l'invention.

Selon une autre caractéristique avantageuse de l'invention, le hall d'intervention 74 du réacteur nucléaire (figure 1), qui s'étend au-dessus de l'enceinte 19 et comporte en particulier le pont principal 75, n'est en communication avec le volume interne de l'enceinte de confinement 19 que pendant les périodes d'entretien, réacteur à l'arrêt. Cette disposition:
- Permet d'une part que le hall 74 n'ait jamais la fonction de confinement à la pression d'accident et les exigences que cela impose sur la conception et la réalisation du Génie civil. Sa seule fonction liée au confinement est d'assurer une certaine limitation de fuite, le confinement étant assuré de manière dynamique par la ventilation.
- Permet d'autre part que le pont principal 75 soit un pont sur rails linéaire (comme la structure du bâtiment) solution moins coûteuse qu'un pont polaire
- Permet enfin permet que ce pont et les dispositifs associés soient partagés entre les réacteurs d'un même NI.

Par ailleurs, l'enceinte 19 est dépourvue des moyens de manutention nécessaires aux opérations d'entretien et de remplacement des assemblages de combustibles nucléaires, logés à l'intérieur de l'enceinte 19. L'enceinte 19 en revanche comporte un couvercle amovible situé au-dessus de la cuve 3, adapté pour permettre lesdites opérations. Ce couvercle est ôté pendant les opérations d'entretien et de remplacement des assemblages de combustibles nucléaires, le pont principal 75 étant utilisé pour réaliser la manutention.

Le procédé de construction du réacteur nucléaire à l'aide de l'ensemble 1 décrit ci-dessus va maintenant être détaillé.

Ce procédé est particulièrement bien adapté à la fabrication d'une grande série de réacteurs nucléaires, tous identiques, du type décrit plus haut.

Comme indiqué ci-dessus, le procédé vise à permettre la fabrication de réacteurs nucléaires à une cadence élevée, en évitant notamment les goulots d'étranglement, et sans mettre en jeu des investissements trop élevés pour des infrastructures de fabrication.

Pour ce faire, le principe général est de réaliser dans des chantiers dédiés le montage et la pré-validation du montage (et non l'aspect fonctionnel) des composants/opérations critiques. Ne sont réalisés localement, sur le site d'exploitation, que les opérations simples, qui ne demandent pas de compétences nucléaires particulières, à l'exception de quelques opérations qui seront décrites plus loin.

La compétitivité économique des SMR repose sur le facteur d'apprentissage caractérisant le fait de pouvoir réaliser de manière reproductible, sur un même site et avec la même structure industrielle un maximum des composants et opérations critiques pour la réalisation du fait de leur importance pour la sûreté et/ou du niveau de qualité requis et/ou de la difficulté à garantir les exigences techniques de réalisation et/ou de la difficulté de maîtrise des technologies mises en œuvre (ci-après désigné par *« composant*/*opération critique* »). Une illustration de l'enjeu du facteur d'apprentissage dans la compétitivité des SMR est donnée dans « SMR economy - Tony Roulstone - July 2015 Nuclear Engineering International »*.*

Le procédé comprend une première étape de fabrication des composants nucléaires chaudronnés, dont la cuve 3 et par exemple un ou plusieurs des composants suivants: le pressuriseur 5, les générateurs de vapeur 7, les équipements internes 4 de la cuve, les accumulateurs de sécurité 11, toutes les cuves, bâches et caisses de stockage 12 destinées à contenir du liquide primaire à haute pression.

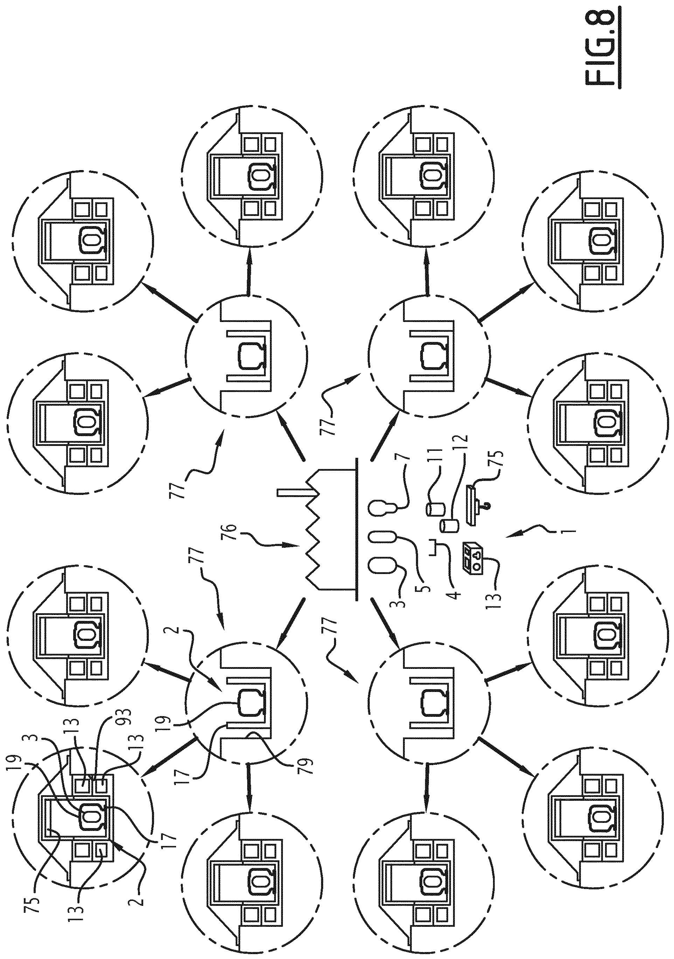

Cette opération est réalisée dans une installation centrale 76, représentée schématiquement sur la figure 8.

Dans la présente demande, une installation est dite centrale quand elle fabrique un composant donné pour tous les réacteurs nucléaires de la série, quelle que soit la région du monde où ils sont implantés. Les différents composants sont fabriqués dans la même installation centrale que les cuves 3, ou dans des installations centrales différentes.

Les composants chaudronnés sont éprouvés dans l'installation centrale qui les fabrique. Ils subissent tous les contrôles réglementaires dans l'installation centrale, notamment le contrôle des soudures. Ils sont conditionnés de manière à pouvoir être livrés à un site d'intégration dans un gabarit acceptable pour des moyens de manutention lourde non exceptionnelle, à savoir une masse inférieure à 300 tonnes.

Les actionneurs critiques (pompes, CRDM,...) sont fabriqués et validés fonctionnellement (en particulier en pression et température) sur une boucle d'essai dédiée, dans l'installation centrale correspondante.

Les skids 13 de circuit de fluide décrits ci-dessus sont typiquement fabriqués validés fonctionnellement dans des installations centrales. De préférence, au moins un ou plusieurs des skids de circuit de fluide suivants sont fabriqués dans des installations centrales: le circuit d'épuration du fluide primaire, le circuit permettant de réaliser un appoint d'eau dans le circuit primaire ou dans le circuit secondaire, le circuit de gestion des effluents, le laboratoire chimique, le circuit de contrôle volumique prévu pour contrôler le volume de liquide primaire et le volume de liquide secondaire circulant dans le réacteur nucléaire, le circuit de contrôle de la composition chimique du fluide primaire, etc.

Chaque skid comporte un tableau de contrôle commande local et un tableau électrique local, permettant de réaliser dans l'installation centrale des tests en pression et en température. Les soudures sont contrôlées dans l'installation centrale, et tous les essais réglementaires sont effectués, dans la mesure du possible, dans l'installation centralisée.

De même, les skids 13 de contrôle commande central du réacteur et les skids 13 des tableaux électriques centraux sont eux aussi fabriqués dans une installation centrale, et testés dans cette installation centrale, dans la mesure du possible.

Le pont principal 75 est lui aussi fabriqué dans une installation centrale.

Le procédé de construction comporte encore une étape de fabrication de la structure préfabriquée 2. Cette étape n'est pas réalisée dans une installation centrale, mais dans une installation d'intégration 77. Comme illustré sur la figure 8, il existe plusieurs installations d'intégration 77 réparties dans différentes régions du monde. L'installation d'intégration 77 est choisie en fonction de la localisation du site d'exploitation du réacteur. Typiquement, on choisit l'installation d'intégration la plus proche du site d'exploitation.

De manière à limiter les investissements en matériel nécessaire pour la fabrication de la structure préfabriquée 2, l'installation d'intégration est typiquement un chantier naval. Ce n'est donc pas une installation dédiée uniquement à la construction de la structure préfabriquée 2, mais au contraire une installation ayant, en plus de son activité de construction de la structure flottante, une activité de construction de bateaux et/ou de plateformes pétrolières, ou toute autre structure maritime.

De tels chantiers navals sont équipés de darses, c'est-à-dire de cales sèches, de moyens de manutention lourds, et de moyens de chaudronnerie adaptés pour la fabrication des navires ou des structures flottantes. Ces moyens, sous réserve d'une adaptation technique d'ampleur limitée, peuvent être utilisés pour la construction de la structure préfabriquée 2 de l'invention. Ceci permet de réduire le montant des investissements nécessaires.

Par ailleurs, le fait d'utiliser plusieurs installations d'intégration réparties dans différentes régions du monde permet d'éviter les goulots d'étranglement pour la fabrication des réacteurs nucléaires.

Les opérations suivantes sont réalisées dans l'installation d'intégration 77 :
- fabrication du bassin 17 ;
- fabrication des canaux 31 et 32, éventuellement ;
- fabrication de l'enceinte 19 ;
- fabrication du châssis 63 et intégration du bassin 17, du canal 31 et de l'enceinte 19 sur le châssis 63, notamment fixation de l'enceinte 19 au châssis 63 ;
- fabrication du chemin de passage 39, montage et raccordement au bassin 17 et à l'enceinte 19.
- introduction de la cuve 3 à l'intérieur de l'enceinte 19 et fixation de la cuve 3 à l'enceinte 19;

Ces opérations de chaudronnerie et de manutention lourde, ne nécessitent pas de précautions de propreté particulières. Elles sont typiquement réalisées dans une darse pour faciliter les manutentions. Une fois ces opérations achevées, la suite des opérations peut se dérouler dans un autre lieu, mieux adapté, de l'installation d'intégration 77.

Ces opérations sont les suivantes :
- introduction dans l'enceinte 19 et fixation à cette enceinte 19 des accumulateurs de sécurité 11, des cuves de stockage 12 et plus généralement de toutes les capacités destinées à recevoir du fluide primaire à haute pression reçus de la ou des installations centrales ;
- réalisation de tous les montages/câblages dans l'enceinte 19 dont de manière non limitative : introduction et fixation dans l'enceinte 19 et raccordement des lignes primaires haute pression et des tronçons internes des lignes vapeur
- introduction dans la cuve 3 des équipements internes 4, des pompes, mécanismes et tous autres capteurs/actionneurs,
- montage des traversées 61 ;
- réalisation de l'ensemble des essais de fin de montage, à caractère non fonctionnel comme épreuves hydrauliques, contrôle des soudures, vérification de bout en bout des raccordements électriques,...

Cette liste de tâches n'est pas exhaustive.

L'étape de montage du circuit de refroidissement de sécurité 14, notamment des échangeurs de chaleur, sur la structure préfabriquée 2 est réalisée dans l'installation d'intégration. Au cours de cette étape, le circuit de refroidissement de sécurité 14 est raccordé fluidiquement au bassin 17 et à la cuve 3.

L'étape de fabrication de la structure préfabriquée 2 comprend une sous-étape de fixation à la peau interne 25 du bassin 17 des connecteurs internes 51, une sous-étape de fixation à la peau externe 27 du bassin 17 des connecteurs externes 53, et une sous-étape de réalisation des câblages associés. Typiquement, les plastrons internes et externes 55, 57, avec les connecteurs et raccordements associés, sont préfabriqués et validés en atelier.

Comme le montre la figure 9, l'installation d'intégration 77 comporte une darse 79, c'est-à-dire une cale sèche séparée de la mer, ou de toute autre voie d'eau, par un batardeau 81. Le bassin 17, éventuellement le canal 31, et le châssis 63 sont fabriqués et assemblés les uns aux autres dans cette darse 79.

L'installation d'intégration 77 comporte encore un atelier 83 équipé de moyens de chaudronnerie, dans lequel est fabriquée l'enceinte 19. Eventuellement, d'autres cuves ou enceintes, qui ne sont pas suffisamment critiques pour nécessiter une fabrication dans une installation centrale, sont fabriquées dans l'atelier 83 comme des caisses de réserve d'eau claire non pressurisées (caisses d'injection de sécurité BP par exemple).

L'installation d'intégration 77 comporte par ailleurs des outils 85 adaptés pour riper l'enceinte 19 au-dessus du bassin 17, et pour descendre de manière contrôlée l'enceinte 19 dans le bassin 17. Cette opération est représentée sur la figure 10. Le bassin 17, pendant cette opération, est posé sur la structure 63 elle-même posée au fond de la cale sèche 79. On entend ici par ripage une opération consistant à déplacer l'enceinte 19 en translation, au ras du sol, sans soulever celle-ci ou en soulevant celle-ci à une très faible hauteur. Les chantiers navals sont généralement équipés d'outils adaptés pour riper des structures de masses équivalentes à celle de l'enceinte 19.

L'introduction de la cuve 3 dans l'enceinte 19 est également réalisée en ripant la cuve 3 au-dessus de l'enceinte 19, et en descendant la cuve 3 à l'intérieur de l'enceinte 19. Les outils utilisés à cet effet sont typiquement les mêmes que ceux utilisés pour déplacer l'enceinte 19. Tous les autres équipements de masse plus limitée ne devraient pas nécessiter ces dispositions, mais il reste possible de le faire en cas de besoin.

Ainsi, il n'est pas nécessaire que l'installation d'intégration 77 soit équipée de moyens de levage de capacité exceptionnelle, qui sont coûteux, et qui doivent être réservés longtemps à l'avance. L'utilisation de moyens de levage de capacité exceptionnelle, en location, n'est pas compatible avec une fabrication à haute cadence des réacteurs nucléaires, du fait des contraintes engendrées par la location de l'outil.

Avantageusement, les flotteurs réutilisables 65 restent fixés à la structure préfabriquée 2 de manière réversible pendant toute l'étape de transport par flottage de la structure préfabriquée 2 jusqu'au site d'exploitation.

Ces flotteurs 65 sont rigidement fixés au châssis 63. Ils sont mis en place pendant que la structure flottante 15 est posée sur le fond de la darse 79. L'utilisation de flotteurs 65 est particulièrement avantageuse car la structure préfabriquée 2 est typiquement très dense, et son centre de gravité n'est pas disposé de manière favorable pour garantir un transport par flottage aisé. L'utilisation de flotteurs 65, positionnés de manière adéquate, permet de corriger ces problèmes.

Par ailleurs, l'utilisation de flotteurs 65 permet d'obtenir un tirant d'eau de 3 m ou moins pour la structure préfabriquée 2, permettant de transporter cette structure par flottage jusqu'à de nombreux sites d'exploitation.

Ceci impose au site d'exploitation d'être situé à proximité d'une voie d'eau ayant un tirant d'eau typique de 3m-3,5 m, avec un niveau 0 du sol avant travaux d'excavation situé entre 0 et + 20 m environ. Ces critères ne sont pas excessivement contraignants.

Comme visible sur les figures 2 et 6, les flotteurs 65 sont disposés le long de deux côtés opposés de la structure préfabriquée 2, par exemple en deux rangées parallèles l'une à l'autre.

Après mise en place des flotteurs 65, un certain nombre d'opérations d'assemblage sont réalisés avec la structure préfabriquée 2 non plus posée au fond d'une darse mais flottant le long d'un quai 87, comme illustré sur la figure 11. La structure préfabriquée 2 est alors recouverte par un atelier 89 de qualité nucléaire, équipé de moyens de manutention tels qu'un pont 91. Ce pont a typiquement une capacité standard, par exemple 40 tonnes. Au cours de cette phase, on effectue le montage dans la structure préfabriquée 2 des équipements légers (petites capacités, tuyauteries, câblages, ....). Les composants lourds ont été montés au préalable dans la darse 79.

C'est typiquement au cours de cette étape que les circuits, capteurs et actionneurs sont montés dans l'enceinte et raccordés, en particulier le pressuriseur 5, les générateurs de vapeur 7, les pompes primaires et tous les autres équipements internes à la cuve reçus de la ou des installations centrales.

Le procédé comporte encore une étape de réalisation de structures de génie civil sur le site d'exploitation du réacteur nucléaire.

Comme visible sur la figure 12, le sol du site d'exploitation est d'abord décaissé, de manière à créer une forme 93. Le fond de la forme est recouvert par un radier 95. Les parois de la forme et le sol du site d'exploitation autour de la forme sont également revêtus par des structures de génie civil, en béton.

Comme visible sur la figure 13, la forme 93 est ensuite remplie d'eau, de manière à constituer un dock provisoire pour la réception de la structure préfabriquée 2.

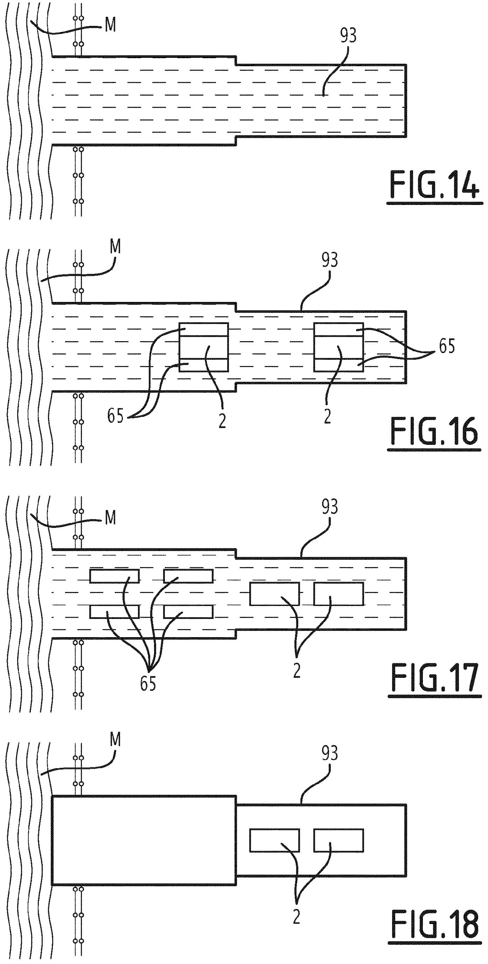

La forme 93 est mise en communication avec la voie d'eau M située à proximité du site d'exploitation, de manière à permettre le flottage de la structure préfabriquée 2 jusque dans la forme 93. Ceci est illustré sur la figure 14.

L'étape de réalisation des structures de génie civil est par exemple effectuée de manière concomitante avec la fabrication de la structure préfabriquée et de la cuve ou des autres équipements principaux du réacteur nucléaire.

Le procédé comporte par ailleurs une étape de transport par flottage de la structure préfabriquée 2 depuis l'installation d'intégration 77 jusqu'au site d'exploitation (figure 15). La structure préfabriquée 2 suit des voies d'eau.

La structure préfabriquée 2 est ensuite poussée dans la forme 93 remplie d'eau (figure 16).

De manière avantageuse, la structure préfabriquée 2 est disposée dans la forme dans une position où les flotteurs occupent des zones déterminées de la forme. A un stade ultérieur du procédé de construction, les locaux des ailes du bâtiment destinés à abriter les skids seront construits dans lesdites zones déterminées de la forme 93.

La forme 93 est avantageusement prévue pour recevoir plusieurs structures préfabriquées 2, comme illustré sur la figure 16. Typiquement, ces structures préfabriquées 2 sont identiques. C'est typiquement le cas quand le site d'exploitation est destiné à recevoir plusieurs réacteurs nucléaires, par exemple 2, 3 ou 4 réacteurs nucléaires.

Avantageusement, l'une des structures préfabriquée est d'un type différent des autres, et est destinée à constituer une piscine de stockage des assemblages de combustibles. Une telle situation est représentée sur la figure 3. On voit sur cette figure quatre structures préfabriquées. La structure préfabriquée située à droite de la figure 3 est destinée à constituer la piscine de stockage 33. La figure 3 montre plusieurs autres structures préfabriquées 2, disposées côte à côte. Les canaux 31 de ces différentes structures préfabriquées 2 sont disposés les uns dans le prolongement des autres. Dans ce cas, le procédé de fabrication comporte une étape de mise en communication des canaux 31 les uns aux autres et de mise en communication avec la piscine de stockage 33.

Une fois la ou les structures préfabriquées 2 en place dans la forme 93, chaque structure préfabriquée est déposée sur le radier 95. Ceci est réalisé par exemple par ballastage des flotteurs 65 et en noyant partiellement le bassin 17 avec une eau de qualité contrôlée.

Les flotteurs 65 sont ensuite séparés de la structure préfabriquée, et sont évacués de la forme 93. Cette étape est illustrée sur la figure 17. Les flotteurs 65 sont typiquement ramenés par flottage jusqu'à l'installation d'intégration 77.

Comme visible sur la figure 18, le procédé de fabrication comporte ensuite une étape consistant à isoler la forme 93 de la voie d'eau M. On assèche ensuite la forme 93 et procède autant que nécessaire à la réalisation des étapes ultérieures au nettoyage de la structure 15 (cas d'un transfert en eau salée par exemple).

Le procédé comporte ensuite une étape de fixation de la structure préfabriquée 2 sur les structures de génie civil, notamment sur le radier 95. Cette fixation est effectuée comme décrit plus haut en référence à la figure 7.

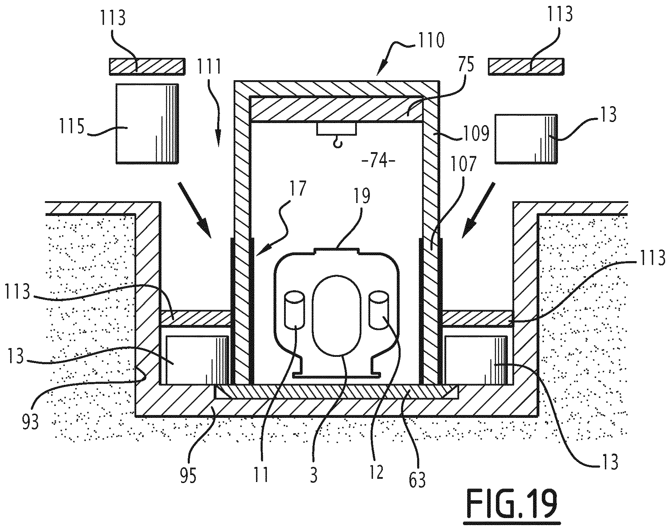

Après fixation de la structure flottante, le procédé comporte une étape de réalisation sur site de structures de génie civil de qualité nucléaire, correspondant à la figure 19.

Ces structures sont représentées par des hachures de type particulier sur les figures 1 et 19. Elles sont en petit nombre.

Cette étape comporte les tâches suivantes :
- couler du béton entre les peaux interne et externe du bassin 17 et du canal 31 de transfert des assemblages de combustibles nucléaires, de manière à créer des voiles 107 autour de l'enceinte 19 ;
- monter les voiles 109 du hall principal 74 situé au-dessus du bassin 17.

Le procédé comporte par ailleurs une étape de mise en place et de raccordement les uns aux autres de différents composants ou skids, provenant directement des installations centrales ou déjà installés dans la structure flottante. Les skids 13 de circuits de fluide, de contrôle commande central et de tableaux électriques centraux sont mis en place dans les locaux des ailes 111 et raccordés entre eux ou avec les composants de la structure préfabriquée 2. Le pont roulant principal 75 est mis en place dans le hall principal 74.

Les lignes fluides BP (basse pression) sont mises en place et raccordées, notamment raccordées aux traversées 61.

L'étape de réalisation sur site de structures de génie civil de qualité nucléaire et l'étape de mise en place et de raccordement des composants ou skids sont réalisées par des équipes formées aux technologies du domaine nucléaire.

D'autres opérations peuvent être réalisées sur le site d'exploitation par du personnel ayant peu ou pas de compétences en matière de technologie nucléaire.

Ces opérations consistent notamment à la réalisation des structures de génie civil des locaux des ailes 111. Ces locaux sont construits au fur et à mesure de la mise en place des skids 13, comme illustré sur la figure 19. On utilise de préférence à cet effet, des structures 113 de génie civil préfabriquées. Les équipes locales réalisent également diverses structures de génie civil coulées, par exemple des radiers ou des parois de soutènement sismique.

Les équipes de construction locales réalisent également le second œuvre 115 standard dans les locaux des ailes 111, par exemple les circuits d'utilités (air comprimé, ventilation bâtiment, eau courante, etc.) et les circuits électriques ou de contrôle commande standard.

Elles réalisent également le merlonage du réacteur, à savoir la construction d'un talus 117 autour du hall principal 74 (figure 1). Ainsi, la protection du réacteur vis-à-vis des agressions extérieures (chute d'avion) est assurée par le fait que le réacteur est enterré et merlonné.

Enfin, le procédé comprend des phases d'essais et de démarrage du réacteur nucléaire, qui sont conjointement réalisées par l'exploitant du réacteur nucléaire avec l'assistance technique du personnel du fabricant du réacteur nucléaire.

Ainsi, le procédé de construction décrit ci-dessus est particulièrement bien adapté à la construction d'une pluralité de réacteurs nucléaires implantés au moins dans des première et seconde régions du monde différentes l'une de l'autre. Certains composants nécessitant des usines spécifiques sont fabriqués dans une même installation centrale.

En revanche, les structures préfabriquées des réacteurs nucléaires implantés dans la première région du monde sont fabriquées dans une première installation d'intégration située dans la première région du monde. Les structures préfabriquées des réacteurs nucléaires implantés dans la seconde région du monde sont fabriquées dans une seconde installation d'intégration située dans la seconde région du monde.

Ainsi, l'un des avantages de l'invention est de permettre de répartir l'industrialisation entre trois niveaux : une ou plusieurs installations centrales, qui desservent tous les sites d'exploitation, une installation d'intégration, et le site d'exploitation lui-même. Ceci permet de capitaliser, dans la ou les installations centrales et dans une moindre mesure dans les installations d'intégration, l'expérience pour toutes les opérations demandant une technicité poussée. Les opérations demandant une technicité moindre peuvent être effectuées par des entreprises du pays accueillant le site d'exploitation.

Par ailleurs, les contraintes imposées aux structures de génie civil réalisées sur le site d'exploitation sont considérablement réduites. Les structures de génie civil n'ont pas de fonction de confinement résistant à la pression, notamment en cas d'accident réglementaire. Ces structures doivent présenter seulement une étanchéité dimensionnée pour la dépression de ventilation. Par ailleurs, les structures de génie civil réalisées sur le site d'exploitation n'ont aucune fonction de supportage des composants nucléaires principaux : bloc chaudière, tuyauterie principale...

Les structures de génie civil apportent une contribution limitée à la tenue ou aux agressions internes (fouettement, rupture), celle-ci étant essentiellement assurée par la répartition des locaux. La protection vis-à-vis des agressions externes, comme indiqué plus haut, est assurée par le fait que le réacteur soit enterré et merlonné.

Il est à noter que certains circuits de fluide, ou des éléments de système du contrôle commande, ou encore des tableaux d'alimentation électrique considérés comme non critiques peuvent être montés sur un ou plusieurs skids et produits non pas dans une installation centralisée mais chez des sous-traitants locaux disposant des moyens et de la compétence nécessaire. Ces skids sont alors acheminés jusqu'au site d'exploitation et montés en même temps que les skids 13 provenant des installations centralisées.

Ainsi, l'invention concerne selon un premier aspect des dispositions constructives de conception permettant la préfabrication de manière répétitive d'une structure préfabriquée, de masse et taille contenue, regroupant la quasi-totalité des composants/opérations critiques, le reste des composants/opérations critiques étant essentiellement préfabriqués dans des skids selon un principe connu. Ces dispositions de constructives concernent la définition de cette structure préfabriquée mais aussi la définition du reste du NI (Nuclear Island ou îlot nucléaire) de manière à ce que la structure préfabriquée s'intègre aisément dans la logique de construction.

## Revendications

1. Ensemble (1) pour la construction d'un réacteur nucléaire faisant partie d'un îlot nucléaire à terre, l'ensemble (1) comprenant :
- une cuve (3) adaptée à contenir un cœur dudit réacteur nucléaire à construire, la cuve (3) étant adaptée à être disposée dans ledit réacteur nucléaire à terre ;
- une structure préfabriquée (2) ayant une coque permettant une utilisation de la structure préfabriquée (2) comme structure flottante;
- la structure préfabriquée (2) comprenant au moins:
* un bassin (17) définissant au moins une partie de la coque de la structure préfabriquée (2) ;
* une enceinte étanche (19), disposée à l'intérieur du bassin (17), l'enceinte étanche (19) étant adaptée à constituer l'enceinte de confinement dudit réacteur nucléaire à terre, la cuve (3) étant placée dans l'enceinte (19), le bassin (17) étant adapté pour la réfrigération de l'enceinte (19) en situation accidentelle du réacteur nucléaire à terre et/ou étant adapté pour être une source froide alimentant un circuit (14) de refroidissement de sécurité du réacteur nucléaire à terre.

2. Ensemble selon la revendication 1, **caractérisé en ce que** le bassin (17) comporte une double peau, la double peau ayant une peau interne (25) métallique étanche délimitant intérieurement le bassin (17), une peau externe (27) métallique définissant la coque de la structure flottante, et des fixations rigides de la peau interne (25) à la peau externe (27), les peaux interne et externe (25, 27) délimitant entre elles un espace vide (29) qui sera ultérieurement coulé en béton pour assurer l'intégration de la structure préfabriquée dans le génie civil de l'îlot nucléaire.

3. Ensemble selon la revendication 2, **caractérisé en ce que** la structure préfabriquée (2) comprend une pluralité de connecteurs internes (51) fixés à la peau interne (25), une pluralité de connecteurs externes (53) fixés à la peau externe (27), chaque connecteur interne (51) étant adapté pour être raccordé à une ou plusieurs lignes internes (52) de puissance et/ou de contrôle-commande, chaque connecteur externe (58) étant adapté pour être raccordé à une ou plusieurs lignes externes (58) de puissance et/ou de contrôle-commande, les connecteurs internes (51) étant raccordés électriquement aux connecteurs externes (53) de telle sorte plusieurs lignes internes (52) arrivant à un même connecteur interne (51) repartent de connecteurs externes (53) différents et/ou que des lignes internes (52) arrivant à des connecteurs internes (51) différents repartent d'un même connecteur externe (53).

4. Ensemble selon l'une quelconque des revendications précédentes, **caractérisé en ce que** la structure préfabriquée (2) comprend un canal (31) de transfert d'assemblages de combustible nucléaire définissant au moins une partie de la coque de la structure préfabriquée (2), et un canal de raccordement (32) pour les assemblages de combustibles nucléaires entre d'un côté l'enceinte (19) et d'un autre côté dans le canal de transfert (31).

5. Ensemble selon la revendication 4, **caractérisé en ce que** le canal (31) comporte une double peau, la double peau ayant une peau interne (34) métallique portant un liner délimitant intérieurement le canal (31), une peau externe (35) métallique définissant une partie de la coque de la structure préfabriquée (2), et des fixations rigides de la peau interne (33) à la peau externe (35), les peaux interne et externe (33, 35) délimitant entre elles un espace vide (37).

6. Ensemble selon l'une quelconque des revendications précédentes, **caractérisé en ce que** la structure préfabriquée (2) comporte un chemin d'accès (39) adapté pour l'accès du personnel à l'intérieur de l'enceinte (19), débouchant d'un côté à l'intérieur de l'enceinte (19) et d'un autre côté à l'extérieur de la structure préfabriquée (2).

7. Ensemble selon l'une quelconque des revendications précédentes, **caractérisé en ce que** l'ensemble (1) est adapté pour la fabrication d'un réacteur nucléaire où un fluide primaire circule dans le cœur de réacteur nucléaire, le réacteur nucléaire comprenant une pluralité de circuits primaires haute pression (8HP) dans lesquels le fluide primaire circule à une pression supérieure à 100 bars, la structure préfabriquée (2) comprenant au moins tous les circuits primaires haute pression (8HP), les circuits primaires haute pression (8HP) étant logés à l'intérieur de l'enceinte (19) et/ou de la cuve (3).

8. Ensemble selon l'une quelconque des revendications précédentes, **caractérisé en ce que** l'ensemble est adapté pour la fabrication d'un réacteur nucléaire où de l'eau est vaporisée dans au moins un organe générateur de vapeur, le réacteur nucléaire comprenant des circuits secondaires (9) dans lesquels de l'eau sous forme liquide ou vapeur circule à une pression supérieure à 30 bars, les circuits secondaires (9) étant pourvus chacun d'un tronçon interne (9I) raccordé fluidiquement à l'organe générateur de vapeur, d'un tronçon externe (9E) adapté pour être raccordé fluidiquement à une machine à vapeur, et d'au moins un organe de coupure (9C) adapté pour sélectivement isoler fluidiquement le tronçon interne (9I) du tronçon externe (9E), la structure préfabriquée (2) comprenant au moins l'intégralité de chaque tronçon interne (9I) et chaque organe de coupure (9C), chaque tronçon interne (9I) et chaque organe de coupure (9C) étant logé à l'intérieur de l'enceinte (19) et/ou de la cuve (3).

9. Ensemble selon l'une quelconque des revendications précédentes, **caractérisé en ce que** l'enceinte (19) est dépourvue des moyens de manutention nécessaires aux opérations d'entretien et de remplacement des assemblages de combustibles nucléaires, logés à l'intérieur de l'enceinte (19), l'enceinte (19) comportant un couvercle amovible situé au-dessus de la cuve (3) adapté pour permettre lesdites opérations.

10. Ensemble selon l'une quelconque des revendications précédentes, **caractérisé en ce que** la structure préfabriquée (2) comporte un châssis métallique (63) auquel le bassin (17) est fixé, l'ensemble (1) comportant des flotteurs (65) fixés de manière réversible à la structure préfabriquée (2), le châssis métallique (63) assurant la reprise et la transmission d'au moins une partie des efforts entre les flotteurs (65) et la structure préfabriquée (2).

11. Procédé de construction d'un réacteur nucléaire à terre à l'aide d'un ensemble (1) selon l'une quelconque des revendications précédentes, le procédé comprenant les étapes suivantes :
- fabrication de la cuve (3);
- fabrication de la structure préfabriquée (2);
- introduction de la cuve (3) à l'intérieur de l'enceinte (19) ;
- réalisation de structures de génie civil sur un site d'exploitation du réacteur nucléaire;
- transport par flottage de la structure préfabriquée (2) jusqu'au site d'exploitation;
- fixation de la structure préfabriquée (22) aux structures de génie civil.

12. Procédé de construction selon la revendication 11 à l'aide d'un ensemble selon la revendication 4 ou 5, **caractérisé en ce que** le procédé comprend une étape de raccordement du canal de transfert (31) à une piscine (33) de stockage d'assemblages de combustible nucléaire.

13. Procédé selon l'une quelconque des revendications 11 à 12 à l'aide d'un ensemble selon la revendication 3, **caractérisé en ce que** l'étape de fabrication de la structure préfabriquée (2) comprend une sous-étape de fixation à la peau interne (25) des connecteurs internes (51), une sous-étape de fixation à la peau externe (27) des connecteurs externes (53), et une sous-étape de réalisation des câblages associés.

14. Procédé selon l'une quelconque des revendications 11 à 13, **caractérisé en ce que** la structure préfabriquée (2) comporte un châssis métallique (63), et une première fixation (67) de l'enceinte au châssis (63), l'étape de fixation de la structure préfabriquée (15) aux structures de génie civil comprenant la fixation du châssis (63) aux structures de génie civil au moins par une seconde fixation (73) thermiquement découplée de la première fixation (67).

15. Procédé selon l'une quelconque des revendications 11 à 14, **caractérisé en ce que** des flotteurs (65) réutilisables sont fixés à la structure préfabriquée (2) de manière réversible pendant l'étape de flottage.

16. Procédé selon la revendication 15, **caractérisé en ce que** l'étape de réalisation des structures de génie civil comprend une sous-étape de réalisation d'une forme (93) remplie d'eau, la structure préfabriquée (2) étant acheminée jusque dans la forme (93) au cours de l'étape de flottage dans une position où les flotteurs (65) occupent des zones déterminées de la forme (93), le procédé comportant une étape de constructions de locaux (111) dans lesdites zones déterminées de la forme (93), lesdits locaux (111) abritant des structures et circuits du réacteur nucléaire non intégrés dans la structure préfabriquée (2).

17. Procédé selon l'une quelconque des revendications 11 à 16 à l'aide d'un ensemble selon la revendication 2, **caractérisé en ce que** qu'il comprend une étape de coulée de béton dans l'espace vide (29) de la double peau du bassin (17).

18. Procédé de construction d'une pluralité de réacteurs nucléaires implantés dans au moins des première et seconde régions du monde différentes l'une de l'autre, chaque réacteur nucléaire étant fabriqué selon le procédé de l'une quelconque des revendications 11 à 17 :
- les cuves (3) de tous les réacteurs nucléaires étant fabriqués dans une même installation centrale (76) ;
- les structures préfabriquées (2) des réacteurs nucléaires implantés dans la première région du monde étant fabriquées dans une première installation d'intégration (77) située dans la première région du monde, les structures préfabriquées (2) des réacteurs nucléaires implantés dans la seconde région du monde étant fabriquées dans une seconde installation d'intégration (77) située dans la seconde région du monde.

## Patentansprüche

1. Anordnung (1) für die Konstruktion eines Nuklearreaktors, der Bestandteil einer bodenseitigen Nuklearanlage ist, wobei die Anordnung (1) umfasst:
- einen Behälter (3), der geeignet ist, einen Kern des zu konstruierenden Nuklearreaktors zu enthalten, wobei der Behälter (3) angepasst ist, in dem bodenseitigen Nuklearreaktor angeordnet zu sein;
- eine vorgefertigte Struktur (2), die eine Ummantelung aufweist, die eine Verwendung der vorgefertigten Struktur (2) als schwimmende Struktur gestattet
- wobei die vorgefertigte Struktur (2) mindestens umfasst:
* ein Becken (17), das mindestens einen Teil der Ummantelung der vorgefertigten Struktur (2) definiert;
* eine dichte Umhüllung (19), die im Inneren des Beckens (17) angeordnet ist, wobei die dichte Umhüllung (19) angepasst ist, das Containment des bodenseitigen Nuklearreaktors zu bilden, wobei der Behälter (3) in der Umhüllung (19) angeordnet ist und das Becken (17) zur Kühlung der Umhüllung (19) in einer Unfallsituation des bodenseitigen Nuklearreaktors geeignet ist und/oder angepasst ist, eine Kühlquelle zu sein, die einen Sicherheitskühlkreis des bodenseitigen Nuklearreaktors versorgt.

2. Anordnung nach Anspruch 1, **dadurch gekennzeichnet, dass** das Becken (17) eine Doppelschale aufweist, wobei die Doppelschale eine dichte metallische Innenwand (25), die das Becken (17) innen begrenzt, eine metallische Außenwand (27), die die Ummantelung der schwimmenden Struktur definiert, und starre Befestigungen der Innenwand (25) an der Außenwand (27) umfasst, wobei die Innenwand und die Außenwand (25, 27) zwischen sich einen leeren Raum (29) begrenzen, der später mit Beton vergossen wird, um die Integration der vorgefertigten Struktur im Tiefbau der Nuklearanlage sicherzustellen.

3. Anordnung nach Anspruch 2, **dadurch gekennzeichnet, dass** die vorgefertigte Struktur (2) eine Mehrzahl von inneren Verbindungselementen (51), die an der Innenwand (25) befestigt sind und eine Mehrzahl von äußeren Verbindungselementen (52), die an der Außenwand (27) befestigt sind, umfasst, wobei jedes innere Verbindungselement (51) angepasst ist, an eine oder mehrere innere Leitungen (52) für Leistung und/oder zur Überwachung-Steuerung angeschlossen zu werden, und jedes äußere Verbindungselement (58) angepasst ist, an eine oder mehrere äußere Leitungen (58) für Leistung und/oder zur Überwachung-Steuerung angeschlossen zu werden, wobei die inneren Verbindungselemente (51) elektrisch mit den äußeren Verbindungselementen (53) derart verbunden sind, dass mehrere inneren Leitungen (52), die an einem selben inneren Verbindungselement (51) ankommen, von unterschiedlichen äußeren Verbindungselementen (53) ausgehen und/oder dass innere Leitungen (52), die an unterschiedlichen inneren Verbindungselementen (51) ankommen, von einem selben äußeren Verbindungselement (53) abgehen.

4. Anordnung nach einem beliebigen der vorhergehenden Ansprüche, **dadurch gekennzeichnet, dass** die vorgefertigte Struktur (2) einen Kanal (31) zum Überführen von nuklearen Brennelementen, der mindestens einen Teil der Ummantelung der vorgefertigten Struktur (2) definiert, und einen Verbindungskanal (32) für die nuklearen Brennelemente zwischen einerseits der Umhüllung (19) und andererseits in den Überführungskanal (31) umfasst.

5. Anordnung nach Anspruch 4, **dadurch gekennzeichnet, dass** der Kanal (31) eine Doppelschale aufweist, wobei die Doppelschale eine metallische Innenschicht (34), die einen Liner trägt, der innen den Kanal (31) begrenzt, eine metallische Außenschicht (35), die einen Teil der Ummantelung der vorgefertigten Struktur (2) definiert und starre Befestigungen der Innenschicht (33) an der Außenschicht (35) aufweist, wobei die Innenschicht und die Außenschicht zwischen sich einen leeren Raum (37) begrenzen.

6. Anordnung nach einem beliebigen der vorhergehenden Ansprüche, **dadurch gekennzeichnet, dass** die vorgefertigte Struktur (2) einen Zugangsweg (39) aufweist, der für den Zugang des Personals in das Innere der Umhüllung (19) angepasst ist und der an einer Seite in das Innere der Umhüllung (19) und an einer anderen Seite nach außen in Bezug auf die vorgefertigte Struktur (2) mündet.

7. Anordnung nach einem beliebigen der vorhergehenden Ansprüche, **dadurch gekennzeichnet, dass** die Anordnung (1) für die Herstellung eines Nuklearreaktors geeignet ist, in dem ein Primärfluid in dem Kern des Nuklearreaktors zirkuliert, wobei der Nuklearreaktor eine Mehrzahl von Primärkreisen hohen Drucks (8HP) umfasst, in denen das Primärfluid bei einem Druck größer als 100 bar zirkuliert, wobei die vorgefertigte Struktur (2) mindestens alle Primärkreise hohen Drucks (8HP) umfasst und die Primärkreise hohen Drucks (8HP) im Inneren der Umhüllung (19) und/oder des Behälters (3) aufgenommen sind.

8. Anordnung nach einem beliebigen der vorhergehenden Ansprüche, **dadurch gekennzeichnet, dass** die Anordnung für die Herstellung eines Nuklearreaktor geeignet ist, in dem Wasser in mindestens einem Dampferzeugungselement verdampft wird, wobei der Nuklearreaktor Sekundärkreise (9) umfasst, in denen Wasser in flüssiger Form oder Dampfform bei einem Druck größer als 30 bar zirkuliert, wobei die Sekundärkreise (9) jeweils mit einem Innenabschnitt (9I), der fluidisch mit dem Dampferzeugungselement verbunden ist, einem Außenabschnitt (9E), der geeignet ist, fluidisch an eine Dampfmaschine angeschlossen zu werden, und mindestens einem Abschaltelement (9C), das geeignet ist, selektiv fluidisch den Innenabschnitt (9I) vom Außenabschnitt (9E) zu trennen, versehen sind, wobei die vorgefertigte Struktur (2) mindestens die Gesamtheit jedes Innenabschnitts (9I) und jedes Abschaltelementes (9C) umfasst, wobei jeder Innenabschnitt (9I) und jedes Abschaltelement (9C) im Inneren der Umhüllung (19) und/oder des Behälters (3) aufgenommen sind.

9. Anordnung nach einem beliebigen der vorhergehenden Ansprüche, **dadurch gekennzeichnet, dass** die Umhüllung (19) frei von Handhabungsmitteln ist, die für Vorgänge des Unterhalts und der Ersetzung von nuklearen Brennstäben notwendig sind, die im Inneren der Umhüllung (19) aufgenommen sind, wobei die Umhüllung (19) einen entfernbaren Deckel aufweist, der über dem Behälter (3) liegt und angepasst ist, die Vorgänge zu ermöglichen.

10. Anordnung nach einem beliebigen der vorhergehenden Ansprüche, **dadurch gekennzeichnet, dass** die vorgefertigte Struktur (2) ein Metallgestell (63) aufweist, an dem das Becken (17) befestigt ist, wobei die Anordnung (1) Schwimmer (65) aufweist, die in reversibler Weise an der vorgefertigten Struktur (2) befestigt sind, wobei das Metallgestell (63) die Übernahme und die Übertragung von mindestens einem Teil der Kräfte zwischen den Schwimmern (65) und der vorgefertigten Struktur (2) sicherstellt.

11. Verfahren zur Konstruktion eines Nuklearreaktors zu Land mithilfe einer Anordnung (1) nach einem beliebigen der vorhergehenden Ansprüche, wobei das Verfahren die folgenden Schritte umfasst:
- Herstellen des Behälters (3);
- Herstellen der vorgefertigten Struktur (2);
- Einsetzen des Behälters (3) in das Innere der Umhüllung (19);
- Erstellen von Tiefbaustrukturen an einem Betriebsstandort des Nuklearreaktors;
- Transportieren der vorgefertigten Struktur (2) durch Flotation bis zum Betriebsstandort;
- Befestigen der vorgefertigten Struktur (22) an den Tiefbaustrukturen.

12. Verfahren zur Konstruktion nach Anspruch 11 mithilfe einer Anordnung nach Anspruch 4 oder 5, **dadurch gekennzeichnet, dass** das Verfahren einen Schritt des Verbindens des Überführungskanals (31) mit einem Lagerbecken (32) für nukleare Brennstäbe umfasst.

13. Verfahren nach einem beliebigen der Ansprüche 11 bis 12 mithilfe einer Anordnung nach Anspruch 3, **dadurch gekennzeichnet, dass** der Schritt des Herstellens der vorgefertigten Struktur (2) einen Unterschritt des Befestigens von inneren Verbindungselementen (51) an der Innenwand (25), einen Unterschritt des Befestigens von äußeren Verbindungselementen (53) an der Außenwand und einen Unterschritt des Durchführens der zugeordneten Verkabelungen umfasst.

14. Verfahren nach einem beliebigen der Ansprüche 11 bis 13, **dadurch gekennzeichnet, dass** die vorgefertigte Struktur (2) ein Metallgestell (63) und eine erste Befestigung (67) der Umhüllung an dem Gestell (63) aufweist, wobei der Schritt des Befestigens der vorgefertigten Struktur (15) an den Tiefbaustrukturen das Befestigen des Gestells (63) an den Tiefbaustrukturen mindestens durch eine zweite Befestigung (73), die thermisch von der ersten Befestigung (67) entkoppelt ist, umfasst.

15. Verfahren nach einem beliebigen der Ansprüche 11 bis 14, **dadurch gekennzeichnet, dass** wiederverwendbare Schwimmer (65) an der vorgefertigten Struktur (2) bei dem Schritt der Flotation in reversibler Weise befestigt sind.

16. Verfahren nach Anspruch 15, **dadurch gekennzeichnet, dass** der Schritt des Erstellens von Tiefbaustrukturen einen Unterschritt des Erstellens einer mit Wasser gefüllten Form (93) umfasst, wobei die vorgefertigte Struktur (2) während des Schrittes der Flotation in die Form (93) in eine Position befördert wird, in der die Schwimmer (65) festgelegte Zonen der Form (93) einnehmen, wobei das Verfahren einen Schritt des Bauens von Räumlichkeiten (111) in den festgelegten Zonen der Form (93) aufweist, wobei die Räumlichkeiten (111) die Strukturen und Kreise des Nuklearreaktors, die nicht in der vorgefertigten Struktur (2) integriert sind, schützen.

17. Verfahren nach einem beliebigen der Ansprüche 11 bis 16 mithilfe einer Anordnung nach Anspruch 2, **dadurch gekennzeichnet, dass** es einen Schritt des Gießens von Beton in den leeren Raum (29) der Doppelschale des Beckens (17) umfasst.

18. Verfahren zum Bau einer Mehrzahl von Nuklearreaktoren, die in mindestens einer ersten und einer zweiten Region der Welt, die voneinander unterschiedlich sind, aufgebaut werden, wobei jeder Nuklearreaktor nach dem Verfahren nach einem beliebigen der Ansprüche 11 bis 17 hergestellt werden, wobei:
- die Behälter (3) aller Nuklearreaktoren in einer selben zentralen Anlage (76) hergestellt werden,
- die vorgefertigten Strukturen (2) der in der ersten Region der Welt aufgebauten Nuklearreaktoren in einer ersten Integrationsanlage (77) hergestellt werden, die in der ersten Region der Welt liegt, und die vorgefertigten Strukturen (2) der in der zweiten Region der Welt aufgebauten Nuklearreaktoren in einer zweiten Integrationsanlage (77), die in der zweiten Region der Welt liegt, hergestellt werden.

## Claims

1. Assembly (1) for the construction of a nuclear reactor which forms part of an onshore nuclear island, the assembly (1) comprising:
- a vessel (3) which is adapted to contain a core of said nuclear reactor to be constructed, the vessel (3) being adapted to be arranged in said onshore nuclear reactor;
- a prefabricated structure (2) having a shell allowing the prefabricated structure (2) to be used as a floating structure;
- the prefabricated structure (2) comprising at least:
* a basin (17) which defines at least part of the shell of the prefabricated structure (2);
* a sealed containment (19) arranged inside the basin (17), the sealed containment (19) being adapted to constitute the containment structure of said onshore nuclear reactor, the vessel (3) being placed in the containment (19), the basin (17) being adapted for cooling the containment (19) in an accident situation of the onshore nuclear reactor and/or being adapted to be a cold source that supplies a safety cooling circuit (14) of the onshore nuclear reactor.

2. Assembly according to claim 1, **characterised in that** the basin (17) has a double skin, the double skin having a leak-tight internal metal skin (25) which delimits the basin (17) on the inside, an external metal skin (27) which defines the shell of the floating structure, and rigid fixings for fixing the internal skin (25) to the external skin (27), the internal and external skins (25, 27) delimiting between them an empty space (29) into which concrete will later be poured in order to integrate the prefabricated structure in the civil engineering of the nuclear island.

3. Assembly according to claim 2, **characterised in that** the prefabricated structure (2) comprises a plurality of internal connectors (51) fixed to the internal skin (25), a plurality of external connectors (53) fixed to the external skin (27), each internal connector (51) being adapted to be connected to one or more internal power and/or instrumentation and control lines (52), each external connector (58) being adapted to be connected to one or more external power and/or instrumentation and control lines (58), the internal connectors (51) being electrically connected to the external connectors (53) in such a manner that multiple internal lines (52) arriving at the same internal connector (51) leave from different external connectors (53) and/or that internal lines (52) arriving at different internal connectors (51) leave from the same external connector (53).

4. Assembly according to any one of the preceding claims, **characterised in that** the prefabricated structure (2) comprises a nuclear fuel assembly transfer channel (31) which defines at least part of the shell of the prefabricated structure (2), and a connection channel (32) for the nuclear fuel assemblies between on one side the containment (19) and on another side the transfer channel (31).

5. Assembly according to claim 4, **characterised in that** the channel (31) has a double skin, the double skin having an internal metal skin (34) carrying a liner which delimits the channel (31) on the inside, an external metal skin (35) which defines part of the shell of the prefabricated structure (2), and rigid fixings for fixing the internal skin (33) to the external skin (35), the internal and external skins (33, 35) delimiting between them an empty space (37).

6. Assembly according to any one of the preceding claims, **characterised in that** the prefabricated structure (2) comprises an access path (39) which is adapted to allow personnel to access the interior of the containment (19) and opens on one side on the inside of the containment (19) and on another side on the outside of the prefabricated structure (2).

7. Assembly according to any one of the preceding claims, **characterised in that** the assembly (1) is adapted for the fabrication of a nuclear reactor in which a primary fluid circulates in the nuclear reactor core, the nuclear reactor comprising a plurality of high-pressure primary circuits (8HP) in which the primary fluid circulates at a pressure greater than 100 bar, the prefabricated structure (2) comprising at least all the high-pressure primary circuits (8HP), the high-pressure primary circuits (8HP) being housed inside the containment (19) and/or the vessel (3).

8. Assembly according to any one of the preceding claims, **characterised in that** the assembly is adapted for the fabrication of a nuclear reactor in which water is vaporised in at least one steam-generating member, the nuclear reactor comprising secondary circuits (9) in which water in the form of liquid or steam circulates at a pressure greater than 30 bar, the secondary circuits (9) each being provided with an internal section (91) which is fluidically connected to the steam-generating member, with an external section (9E) which is adapted to be fluidically connected to a steam engine, and with at least one cut-off member (9C) which is adapted to selectively fluidically isolate the internal section (91) from the external section (9E), the prefabricated structure (2) comprising at least the totality of each internal section (91) and each cut-off member (9C), each internal section (91) and each cut-off member (9C) being housed inside the containment (19) and/or the vessel (3).

9. Assembly according to any one of the preceding claims, **characterised in that** the containment (19) does not have the handling means necessary for the operations of maintenance and replacement of the nuclear fuel assemblies housed inside the containment (19), the containment (19) comprising a removable cover situated above the vessel (3) which is adapted to permit said operations.

10. Assembly according to any one of the preceding claims, **characterised in that** the prefabricated structure (2) comprises a metal frame (63) to which the basin (17) is fixed, the assembly (1) comprising floats (65) which are reversibly fixed to the prefabricated structure (2), the metal frame (63) serving to absorb and transmit at least a portion of the stresses between the floats (65) and the prefabricated structure (2).

11. Method for construction of an onshore nuclear reactor with the aid of an assembly (1) according to any one of the preceding claims, the method comprising the following steps:
- fabrication of the vessel (3);
- fabrication of the prefabricated structure (2);
- introduction of the vessel (3) into the containment (19);
- production of civil engineering structures at an operating site of the nuclear reactor;
- transport of the prefabricated structure (2) to the operating site by flotation;
- fixing of the prefabricated structure (22) to the civil engineering structures.

12. Construction method according to claim 11 with the aid of an assembly according to claim 4 or 5, **characterised in that** the method comprises a step of connection of the transfer channel (31) to a storage pool (33) for nuclear fuel assemblies.

13. Method according to any one of claims 11 to 12 with the aid of an assembly according to claim 3, **characterised in that** the step of fabrication of the prefabricated structure (2) comprises a sub-step of fixing of the internal connectors (51) to the internal skin (25), a sub-step of fixing of the external connectors (53) to the external skin (27), and a sub-step of production of the associated cabling.

14. Method according to any one of claims 11 to 13, **characterised in that** the prefabricated structure (2) comprises a metal frame (63) and a first fixing (67) for fixing the containment to the frame (63), the step of fixing of the prefabricated structure (15) to the civil engineering structures comprising fixing of the frame (63) to the civil engineering structures at least by a second fixing (73) that is thermally decoupled from the first fixing (67).

15. Method according to any one of claims 11 to 14, **characterised in that** reusable floats (65) are reversibly fixed to the prefabricated structure (2) during the flotation step.

16. Method according to claim 15, **characterised in that** the step of production of the civil engineering structures comprises a sub-step of production of a form (93) filled with water, the prefabricated structure (2) being transported into the form (93) during the flotation step into a position in which the floats (65) occupy specified zones of the form (93), the method comprising a step of construction of rooms (111) in said specified zones of the form (93), said rooms (111) housing structures and circuits of the nuclear reactor that are not integrated in the prefabricated structure (2).

17. Method according to any one of claims 11 to 16 with the aid of an assembly according to claim 2, **characterised in that** it comprises a step of pouring of concrete into the empty space (29) in the double skin of the basin (17).

18. Method for construction of a plurality of nuclear reactors installed in at least first and second regions of the world which are different from one another, each nuclear reactor being fabricated by the method of any one of claims 11 to 17:
- the vessels (3) of all the nuclear reactors being fabricated at the same central facility (76);
- the prefabricated structures (2) of the nuclear reactors installed in the first region of the world being fabricated at a first integration facility (77) situated in the first region of the world, the prefabricated structures (2) of the nuclear reactors installed in the second region of the world being fabricated at a second integration facility (77) situated in the second region of the world.
